(19) Europäisches Patentamt / European Patent Office / Office européen des brevets

(11) **EP 3 188 393 B1**

(12) **EUROPEAN PATENT SPECIFICATION**

(45) Date of publication and mention
of the grant of the patent:
**17.04.2019 Bulletin 2019/16**

(21) Application number: **14901957.2**

(22) Date of filing: **19.09.2014**

(51) Int Cl.:
*H04L 1/06* $^{(2006.01)}$          *H04B 7/0452* $^{(2017.01)}$
*H04L 5/00* $^{(2006.01)}$

(86) International application number:
**PCT/CN2014/086940**

(87) International publication number:
**WO 2016/041196 (24.03.2016 Gazette 2016/12)**

(54) **MULTIPLEXING METHOD FOR MULTIPLE USERS, BASE STATION, AND USER TERMINAL**

MULTIPLEXVERFAHREN FÜR MEHRERE BENUTZER, BASISSTATION UND
BENUTZERENDGERÄT

PROCÉDÉ DE MULTIPLEXAGE DESTINÉ À DE MULTIPLES UTILISATEURS, STATION DE BASE
ET TERMINAL UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.07.2017 Bulletin 2017/27**

(73) Proprietor: **Huawei Technologies Co., Ltd.
Longgang District
Shenzhen, Guangdong 518129 (CN)**

(72) Inventor: **SHANG, Zheng
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(56) References cited:
WO-A1-2014/135506     WO-A2-2004/038984
CN-A- 101 374 034      CN-A- 101 378 282
CN-A- 102 594 486      CN-A- 102 932 043
US-A1- 2010 195 615    US-A1- 2012 008 587
US-A1- 2012 076 039    US-A1- 2012 087 321
US-A1- 2013 051 302    US-A1- 2013 242 853

• JUHO LEE ET AL: "MIMO Technologies in 3GPP
LTE and LTE-Advanced", EURASIP JOURNAL
ON WIRELESS COMMUNICATIONS AND
NETWORKING, vol. 48, no. 10, 1 January 2009
(2009-01-01), page 2921, XP055275492, ISSN:
1687-1499, DOI: 10.1155/2009/302092

**Description**

**TECHNICAL FIELD**

Embodiments of the present invention relate to the communications field, and in particular, to a multi-user multiplexing method, a base station, and a user terminal.

**BACKGROUND**

As wireless communication becomes a growing basic need in people's life, people are imposing a requirement for a "higher, faster, and farther" network in the future. However, the network currently still faces a series of challenges, such as requirements for exponential growth in capacity, massive connections, and zero transmission delay.

For example, US 2012/0008587A1 refers to a method and apparatus for transmitting a signal in a wireless communication system. The method includes: generating R spatial streams each of which is generated on the basis of an information stream and a reference signal; generating N transmit streams on the basis of the R spatial streams and a precoding matrix (where R<N); mapping the N transmit streams to at least one resource block; and generating N signals from the N transmit streams mapped to the at least one resource block, and transmitting the N signals to a user equipment through respective antennas.

Further, WO 2004/038984A2 refers to a MIMO system supporting multiple spatial multiplexing modes for improved performance and greater flexibility. These modes may include a single-user steered mode that transmits multiple data streams on orthogonal spatial channels to a single receiver, a single-user non-steered mode that transmits multiple data streams from multiple antennas to a single receiver without spatial processing at a transmitter, a multi-user steered mode that transmits multiple data streams simultaneously to multiple receivers with spatial processing at a transmitter, and a multi-user non-steered mode that transmits multiple data streams from multiple antennas (co-located or non co-located) without spatial processing at the transmitter(s) to receiver(s) having multiple antennas. For each set of user terminal(s) selected for data transmission on the downlink and/or uplink, a spatial multiplexing mode is selected for the user terminal set from among the multiple spatial multiplexing modes supported by the system.

Further, US 2010/0195615A1 refers to a technique for receiving and transmitting downlink reference signals. When transmitting downlink data demodulation reference signals (DMRS) (or reference signals for downlink data demodulation) by using two or more layers, the DMRS of each layer may be multiplexed by using a code division multiplexing method and then transmitted. The DMRS for each of the two or more layers may be used for one user equipment or for two or more user equipments. And, downlink control signals for transmitting and receiving such DMRS may be configured to have the same format regardless of a single-user mode (or SU-MIMO mode) or a multi-user mode (or MU-MIMO mode), thereby being used.

A large-scale antenna technology is an effective technology for enabling future capacity growth. By deploying a large quantity of antenna arrays, spatial resolution of a signal can be substantially improved, so that transmission of a target signal has strong directivity. With a multi-user multiple-input multiple-output (Multi-User Multiple-Input Multiple-Output, MU-MIMO) technology, a spatial multiplexing rate of user terminals can be greatly improved, so that frequency usage efficiency is improved.

During directional signal transmission using a large-scale antenna, a cell-specific reference signal (Cell-specific Reference Signal, CRS) is used as a pilot in an existing Long Term Evolution (Long Term Evolution, LTE) system. As a limitation, the CRS cannot be used to differentiate more spatial multiplexing layers, and consequently, the current system supports spatial multiplexing for only a small quantity of user terminals. Currently, no technology can implement spatial multiplexing between more user terminals. For example, in an LTE Rel-8 system, the CRS is a common reference signal at a cell level and is same to all user terminals within a cell. A Rel-8 protocol defines that a maximum quantity of CRS antenna ports is 4, and therefore only a maximum of four layers of data streams that require spatial multiplexing can be supported. This prevents more user terminals from being multiplexed.

**SUMMARY**

Embodiments of the present invention provide a multi-user multiplexing method, a base station, and a user terminal, so as to implement spatial multiplexing of multiple user terminals and improve utilization of time-frequency resources.

The invention is defined in the independent claims. Advantageous embodiments are set out in the dependent claims.

It can be learned from the foregoing technical solutions that the embodiments of the present invention have the following advantages:

In the embodiments of the present invention, a base station weights, by using a precoding matrix, multiple data streams that need to be transmitted to N user terminals, to obtain to-be-transmitted data streams that are mapped onto K physical transmit antennas; the base station weights, by using the precoding matrix, a pilot signal that needs to be transmitted to the N user terminals, to obtain to-be-transmitted pilot signals that are mapped onto the K physical transmit antennas; and finally, the base station sends the to-be-transmitted data streams and the to-be-transmitted pilot signals to the N user terminals by using the K physical transmit antennas, where the to-be-transmitted data streams and the to-be-transmitted pilot signals are mapped onto different time-frequency resources, and the precoding matrix is obtained by means of calculation according to characteristics of channels from the K physical transmit antennas to the N user terminals. The base station separately weights, by using the precoding matrix, both the data streams and the pilot signal that need to be transmitted to the N user terminals, and after completing weighting, transmits the to-be-transmitted data streams and the to-be-transmitted pilot signals by using the K physical transmit antennas of the base station, thereby implementing spatial multiplexing between the N user terminals. The multiple data streams may be multiplexed to the N user terminals by means of weighting with the precoding matrix. In addition, spatial multiplexing is implemented for the pilot signal by means of weighting with the precoding matrix, and the to-be-transmitted pilot signal obtained by means of weighting no longer depends on a CRS for differentiating space-division user terminal layer numbers. Therefore, spatial multiplexing can be performed for more user terminals, and utilization of time-frequency resources can be improved.

## BRIEF DESCRIPTION OF DRAWINGS

FIG. 1 is a schematic block flowchart of a multi-user multiplexing method according to an embodiment of the present invention;

FIG. 2 is a schematic block flowchart of another multi-user multiplexing method according to an embodiment of the present invention;

FIG. 3 is a schematic block flowchart of another multi-user multiplexing method according to an embodiment of the present invention;

FIG. 4 is a schematic diagram of a result of measurement of RSRP corresponding to various quantities of user terminals according to an embodiment of the present invention;

FIG. 5 is a schematic structural diagram of a TDD frame according to an embodiment of the present invention;

FIG. 6-a is a schematic diagram of a mapping process of multiplexing a common signal, a data stream, scheduling information, and a pilot signal by a base station;

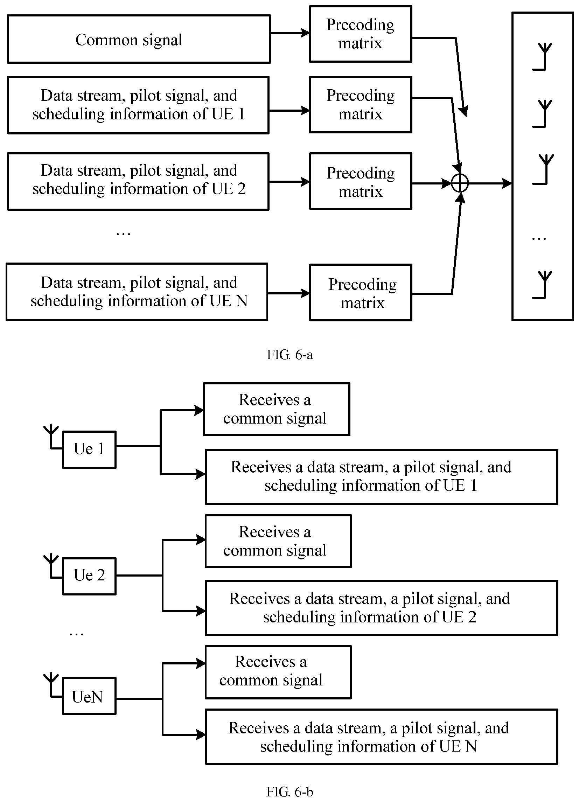

FIG. 6-b is a schematic diagram of a processing process of receiving a common signal, a data stream, scheduling information, and a pilot signal by each user terminal;

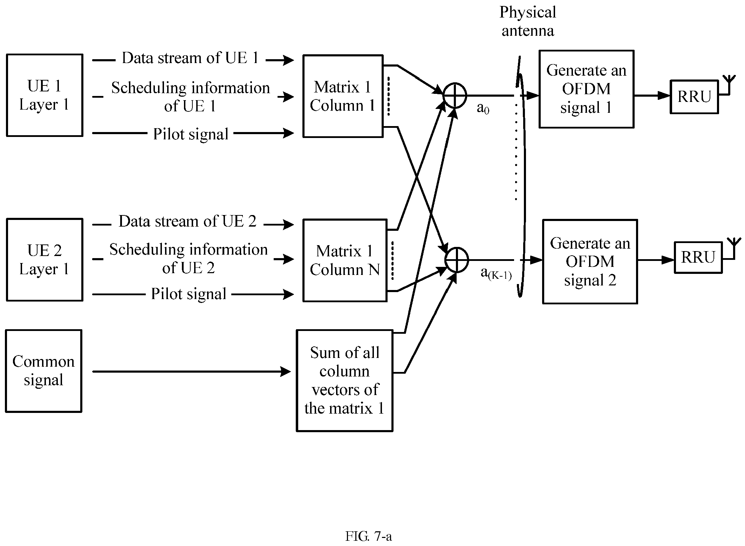

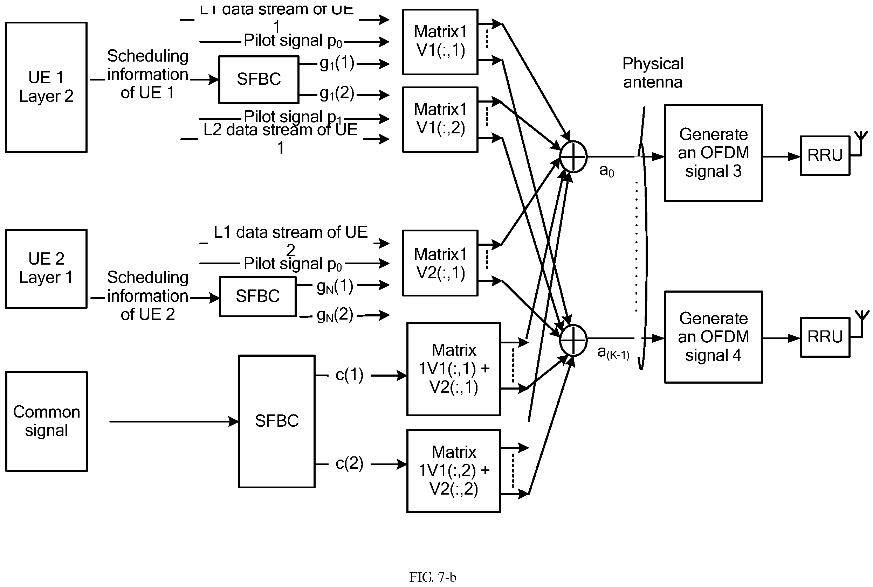

FIG. 7-a is a schematic diagram of an application scenario of transmitting a data stream, a pilot signal, scheduling information, and a common signal by a base station;

FIG. 7-b is a schematic diagram of another application scenario of transmitting a data stream, a pilot signal, scheduling information, and a common signal by a base station;

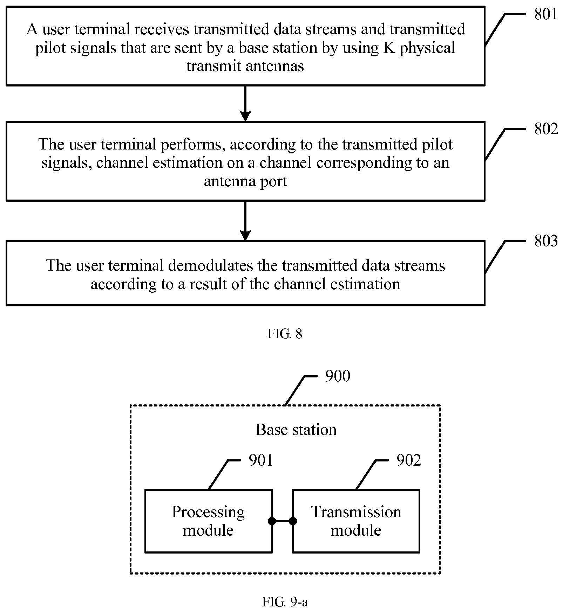

FIG. 8 is a schematic block flowchart of another multi-user multiplexing method according to an embodiment of the present invention;

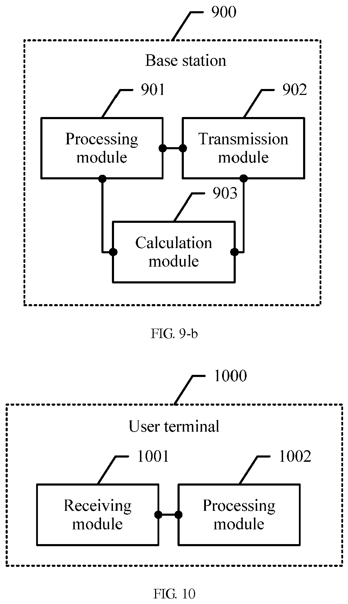

FIG. 9-a is a schematic diagram of a composition structure of a base station according to an embodiment of the present invention;

FIG. 9-b is a schematic diagram of a composition structure of another base station according to an embodiment of the present invention;

FIG. 10 is a schematic diagram of a composition structure of user equipment according to an embodiment of the present invention;

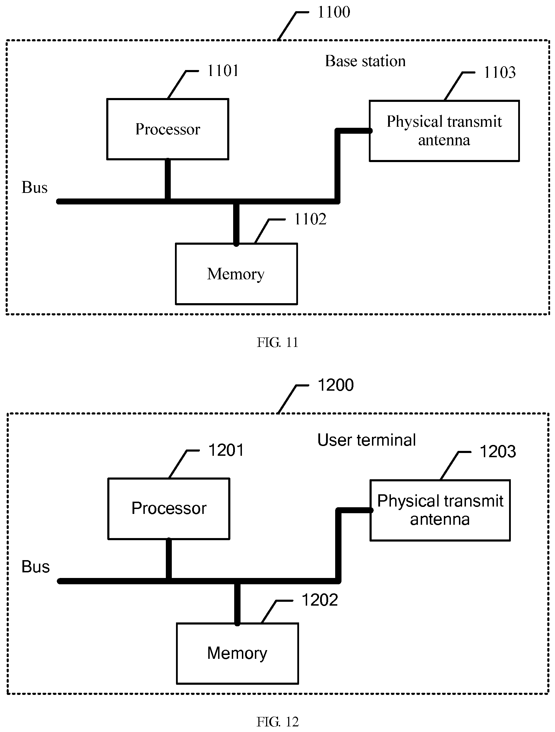

FIG. 11 is a schematic diagram of a composition structure of another base station according to an embodiment of the present invention; and

FIG. 12 is a schematic diagram of a composition structure of user equipment according to an embodiment of the present invention.

## DESCRIPTION OF EMBODIMENTS

Embodiments of the present invention provide a multi-user multiplexing method, a base station, and a user terminal, so as to implement spatial multiplexing of multiple user terminals and improve utilization of time-frequency resources.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by a person skilled in the art based on the embodiments of the present invention shall fall within the protection scope of the present invention.

In the specification, claims, and accompanying drawings of the present invention, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in the embodiments of the present invention. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The following separately provides detailed description.

**Embodiment 1**

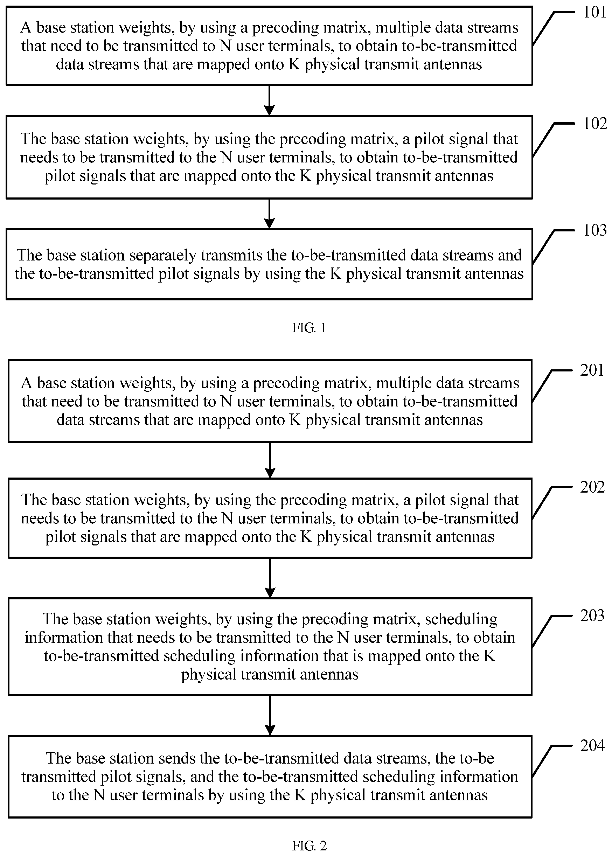

An embodiment of a multi-user multiplexing method in the present invention may be applied to a scenario in which a base station performs spatial multiplexing for multiple user terminals. As shown in FIG. 1, a multi-user multiplexing method provided in an embodiment of the present invention may include the following steps.

101. A base station weights, by using a precoding matrix, multiple data streams that need to be transmitted to N user terminals, to obtain to-be-transmitted data streams that are mapped onto K physical transmit antennas.

N and K are natural numbers. The precoding matrix is obtained by means of calculation according to characteristics of channels from the K physical transmit antennas to the N user terminals.

In this embodiment of the present invention, to implement spatial multiplexing for multiple user terminals, the base station uses N to denote a quantity of spatial multiplexing user terminals. The base station weights, by using the precoding matrix, the multiple data streams that need to be transmitted to the N user terminals, to obtain the to-be-transmitted data streams that are mapped onto the K physical transmit antennas. The data stream refers to data information sent by a base station to a user terminal. One data stream generated by the base station needs to be sent to one user terminal. A total quantity of data streams generated by the base station may be equal to a quantity of user terminals for which spatial multiplexing needs to be performed; or a total quantity of data streams generated by the base station may also be greater than a quantity of user terminals for which spatial multiplexing needs to be performed, and in this case, two data streams may be sent to a same user terminal, or three or more data streams may be sent to a same user terminal. To implement spatial multiplexing between multiple user terminals, the base station may weight all generated data streams by using the precoding matrix. Multiple physical transmit antennas are deployed on the base station, and a quantity of the physical transmit antennas is denoted by K. All the data streams generated by the base station are weighted by using the precoding matrix into the to-be-transmitted data streams that are mapped onto the K physical transmit antennas.

It should be noted that, in this embodiment of the present invention, before step 101 is performed, the multi-user multiplexing method provided in this embodiment of the present invention may further include the following steps: The base station broadcasts antenna port configuration information to the user terminals. One or more antenna ports may be configured for the base station. When multiple antenna ports are configured for the base station, a quantity of the antenna ports is denoted by the letter t in this embodiment of the present invention, and t is a positive integer greater than 1. An implementation manner of weighting, by the base station, the data streams by using the precoding matrix varies with the quantity of the antenna ports configured for the base station. A specific implementation manner is described in subsequent embodiments. Further, an antenna port configured for the base station may be specifically a cell-specific reference signal (Cell-specific Reference Signals, CRS for short in English) antenna port. The CRS antenna port may also be referred to as a cell-level antenna port. In an LTE system, a base station can simultaneously transmit more data streams when more CRS antenna ports are configured for the base station.

102. The base station weights, by using the precoding matrix, a pilot signal that needs to be transmitted to the N user terminals, to obtain to-be-transmitted pilot signals that are mapped onto the K physical transmit antennas.

In this embodiment of the present invention, to implement spatial multiplexing for multiple user terminals, the base station uses N to denote a quantity of spatial multiplexing user terminals. The base station weights, by using the precoding matrix, the pilot signal that needs to be transmitted to the N user terminals, to obtain the to-be-transmitted pilot signals that are mapped onto the K physical transmit antennas. The pilot signal refers to a reference signal sent by a base station to a user terminal for signal estimation. Specifically, the pilot signal may be a CRS. When one antenna port is configured for the base station, the base station needs to generate one pilot signal and send the pilot signal to the user terminal. When t antenna ports are configured for the base station, the base station may need to generate two or more pilot signals and send the pilot signals to the user terminal. To implement spatial multiplexing between multiple user terminals, the base station may weight all generated pilot signals by using the precoding matrix. Multiple physical transmit antennas are deployed on the base station, and a quantity of the physical transmit antennas is denoted by K. A pilot signal generated by the base station is weighted by using the precoding matrix into to-be-transmitted pilot signals that are mapped onto the K physical transmit antennas. The precoding matrix is obtained by means of calculation according to characteristics of channels from the K physical transmit antennas to the N user terminals. That is, weight values of the precoding matrix need to be specifically obtained by means of calculation according to characteristics of the channels from the K physical transmit antennas to the N user terminals for which spatial multiplexing needs to be performed. Spatial multiplexing transmission from the pilot signals to the N user terminals may be implemented by means of weighting with the precoding matrix.

It should be noted that one or more antenna ports may be configured for the base station. When multiple antenna ports are configured for the base station, a quantity of the antenna ports is denoted by the letter t in this embodiment of the present invention, and t is a positive integer greater than 1. An implementation manner of weighting, by the base station, the pilot signal by using the precoding matrix varies with the quantity of the antenna ports configured for the base station. A specific implementation manner is described in subsequent embodiments.

It may be understood that, in this embodiment of the present invention, there is no particular time sequence between step 101 and step 102. Step 101 may be performed before step 102, or may be performed after step 102, or may be performed concurrently with step 102. In FIG. 1, as an example for description, step 101 is performed before step 102, and this is not construed as a limitation to the present invention herein.

103. The base station sends the to-be-transmitted data streams and the to-be-transmitted pilot signals to the N user terminals by using the K physical transmit antennas.

The to-be-transmitted data stream and the to-be-transmitted pilot signal are mapped onto different time-frequency resources.

In this embodiment of the present invention, after the base station separately obtains the to-be-transmitted data streams and the to-be-transmitted pilot signals by using step 101 and step 102, a mapping relationship of the data stream, the pilot signal, and the scheduling information on time-frequency resources does not change. Therefore, the to-be-transmitted data stream and the to-be-transmitted pilot signal are still separately mapped onto different time-frequency resources. The base station may send the to-be-transmitted data streams and the to-be-transmitted pilot signals to the N user terminals by using the K physical transmit antennas. Herein, transmitting the to-be-transmitted data streams and the to-be-transmitted pilot signals by using the K physical transmit antennas refers to transmitting the to-be-transmitted data streams and the to-be-transmitted pilot signals by sharing the K physical transmit antennas. The to-be-transmitted data streams need to be transmitted by using the K physical transmit antennas, and the to-be-transmitted pilot signal also needs to be transmitted by using the K physical transmit antennas, except that the to-be-transmitted data stream and the to-be-transmitted pilot signal are mapped onto different time-frequency resources. Because the to-be-transmitted data stream and the to-be-transmitted pilot signal occupy different time-frequency resources, as a receive end, the user terminals may determine to obtain a corresponding data stream and pilot signal from different time-frequency resources.

It can be learned from the description of the present invention in the foregoing embodiment that a base station weights, by using a precoding matrix, multiple data streams that need to be transmitted to N user terminals, to obtain to-be-transmitted data streams that are mapped onto K physical transmit antennas; the base station weights, by using the precoding matrix, a pilot signal that needs to be transmitted to the N user terminals, to obtain to-be-transmitted pilot signals that are mapped onto the K physical transmit antennas; and finally, the base station sends the to-be-transmitted data streams and the to-be-transmitted pilot signals to the N user terminals by using the K physical transmit antennas, where the to-be-transmitted data stream and the to-be-transmitted pilot signal are mapped onto different time-frequency resources, and the precoding matrix is obtained by means of calculation according to characteristics of channels from the K physical transmit antennas to the N user terminals. The base station separately weights, by using the precoding matrix, both the data streams and the pilot signal that need to be transmitted to the N user terminals, and after completing weighting, transmits the to-be-transmitted data streams and the to-be-transmitted pilot signals by using the K physical transmit antennas of the base station, thereby implementing spatial multiplexing between the N user terminals. The multiple data streams may be multiplexed to the N user terminals by means of weighting with the precoding matrix. In addition, spatial multiplexing is implemented for the pilot signal by means of weighting with the precoding matrix, and the to-be-transmitted pilot signal obtained by means of weighting no longer depends on a CRS for differentiating space-division user terminal layer numbers. Therefore, spatial multiplexing can be performed for more user terminals, and utilization of time-frequency resources can be improved.

## Embodiment 2

As shown in FIG. 2, a multi-user multiplexing method provided in another embodiment of the present invention may include the following steps.

201. A base station weights, by using a precoding matrix, multiple data streams that need to be transmitted to N user terminals, to obtain to-be-transmitted data streams that are mapped onto K physical transmit antennas.

N and K are natural numbers. The precoding matrix is obtained by means of calculation according to characteristics of channels from the K physical transmit antennas to the N user terminals.

It should be noted that, in this embodiment of the present invention, to implement spatial multiplexing for the N user terminals, the base station may weight, by using the precoding matrix, the multiple data streams that need to be transmitted to the N user terminals, to obtain the to-be-transmitted data streams. The to-be-transmitted data streams are obtained by weighting the original multiple data streams according to the precoding matrix. The precoding matrix is obtained by means of calculation according to the characteristics of the channels from the K physical transmit antennas to the N user terminals. The to-be-transmitted data streams are mapped onto the K physical transmit antennas by means of weighted calculation. In addition, the user terminal may have one or more receive antennas, and in a specific application scenario, a quantity of receive antennas may be determined by a user terminal.

In this embodiment of the present invention, the precoding matrix used by the base station needs to match the characteristics of the channels from the K physical transmit antennas to the user terminals. Weight values of the precoding matrix are obtained by means of calculation according to the characteristics of the channels from the K physical transmit antennas to the N user terminals. In some embodiments of the present invention, the multi-user multiplexing method may further include the following steps:
when the channel characteristics or scheduled user terminals change, recalculating weight values of the precoding matrix used to weight the data streams and the pilot signal.

That is, when the base station weights the data streams and the pilot signal by using the precoding matrix, the precoding matrix is not constant. Instead, the base station recalculates the weight values of the precoding matrix each time when the characteristics of the channels from the K physical transmit antennas to the N user terminals change or the scheduled user terminals change. For example, there are 16 user terminals for which spatial multiplexing needs to be performed, and when a quantity of user terminals increases to 20 or decreases to 10, the base station recalculates the weight values of the precoding matrix. The following uses an example to describe specific calculation of the weight values of the precoding matrix.

For the calculation of the precoding matrix, an existing linear precoding or non-linear precoding calculation method may be used, including zero forcing (Zero Forcing, ZF), block diagonalization (Block Diagonalization, BD), DPC (Dirty-Paper Coding), THP (Tomlinson-Harashima precoding), or the like. ZF is used as an example. It is assumed that there are K physical transmit antennas and N user terminals, and a single antenna is configured for each user terminal. The channels from the K physical transmit antennas to the N user terminals may be denoted by $H=[_{h1};\ _{h2};\ ...;\ _{hN}]$, where H is an $N \times K$ matrix, $_{hi}$ denotes a channel from the K physical transmit antennas to the $i^{th}$ user terminal and is a $1 \times K$ row vector. A ZF calculation method for the precoding matrix is $W=^{HH}(H \times ^{HH})^{-1}$, where $^{HH}$ denotes a conjugate transpose of H, $(H \times ^{HH})^{-1}$ denotes an inversion operation of a matrix $H \times ^{HH}$, $\times$ denotes matrix multiplication. V is a precoding matrix that is obtained by using the ZF calculation method. $V=[_{V1},\ _{V2},...,_{VN}]$ and is a $K \times N$ matrix, where $_{Vi}$ denotes a vector that is used to weight a data stream/pilot signal of the $i^{th}$ user terminal, and is a $K \times 1$ column vector.

202. The base station weights, by using the precoding matrix, a pilot signal that needs to be transmitted to the N user terminals, to obtain to-be-transmitted pilot signals that are mapped onto the K physical transmit antennas.

Step 201 and step 202 are the same as step 101 and step 102 in the foregoing embodiment, and details are not described herein again.

203. The base station weights, by using the precoding matrix, scheduling information that needs to be transmitted to the N user terminals, to obtain to-be-transmitted scheduling information that is mapped onto the K physical transmit antennas.

The to-be-transmitted data stream, the to-be-transmitted pilot signal, and the to-be-transmitted scheduling information are mapped onto different time-frequency resources.

In this embodiment of the present invention, to implement spatial multiplexing for multiple user terminals, the base station uses N to denote a quantity of spatial multiplexing user terminals. The base station weights, by using the precoding matrix, the scheduling information that needs to be transmitted to the N user terminals, to obtain the to-be-transmitted scheduling information that is mapped onto the K physical transmit antennas. The scheduling information refers to a resource scheduling instruction sent by a base station to a user terminal. The base station generates one piece of scheduling information for each user terminal, and the base station generates N pieces of scheduling information for the N user terminals that require spatial multiplexing. It should be noted that if there are multiple data streams for one user terminal, the base station still generates only one piece of scheduling information for the user terminal, but the piece of scheduling information includes a scheduling instruction for the multiple data streams. Specifically, the scheduling information may be carried on a physical downlink control channel (Physical Downlink Control Channel, PDCCH). To implement spatial multiplexing between multiple user terminals, the base station may weight all generated scheduling information by using the precoding matrix. Multiple physical transmit antennas are deployed on the base station, and a quantity of the physical transmit antennas is denoted by K. All the scheduling information generated by the base station is weighted by using the precoding matrix into the to-be-transmitted scheduling information that is mapped onto the K physical transmit antennas.

It should be noted that one or more antenna ports may be configured for the base station. When multiple antenna ports are configured for the base station, a quantity of the antenna ports is denoted by the letter t in this embodiment of the present invention, and t is a positive integer greater than 1. An implementation manner of weighting, by the base station, the scheduling information by using the precoding matrix varies with the quantity of the antenna ports configured by the base station. A specific implementation manner is described in subsequent embodiments.

204. The base station sends the to-be-transmitted data streams, the to-be-transmitted pilot signal, and the to-be-transmitted scheduling information to the N user terminals by using the K physical transmit antennas.

In this embodiment of the present invention, after the base station separately obtains the to-be-transmitted data streams, the to-be-transmitted pilot signals, and the to-be-transmitted scheduling information by using step 201, step 202, and step 203, a mapping relationship of the data stream, the pilot signal, and the scheduling information on time-frequency resources does not change. Therefore, the to-be-transmitted data stream, the to-be-transmitted pilot signal, and the to-be-transmitted scheduling information are still separately mapped onto different time-frequency resources. The base station may send the to-be-transmitted data streams, the to-be-transmitted pilot signals, and the to-be-transmitted scheduling information to the N user terminals by using the K physical transmit antennas. Herein, transmitting the to-be-transmitted data streams, the to-be-transmitted pilot signals, and the to-be-transmitted scheduling information by using the K physical transmit antennas refers to transmitting the to-be-transmitted data streams, the to-be-transmitted pilot signals, and the to-be-transmitted scheduling information by sharing the K physical transmit antennas. That is, the to-be-transmitted data streams need to be transmitted by using the K physical transmit antennas, the to-be-transmitted pilot signals also need to be transmitted by using the K physical transmit antennas, and the to-be-transmitted scheduling information also needs to be transmitted by using the K physical transmit antennas, except that the to-be-transmitted data streams, the to-be-transmitted pilot signal, and the to-be-transmitted scheduling information are mapped onto different time-frequency resources. Because the to-be-transmitted data stream, the to-be-transmitted pilot signal, and the to-be-transmitted scheduling information occupy different time-frequency resources, as a receive end, the user terminals may determine to obtain a corresponding data stream and pilot signal from different time-frequency resources.

It should be noted that, in this embodiment of the present invention, there is no particular time sequence between step 201, step 202, and step 203. Step 201, step 202, and step 203 may be performed sequentially; or step 202 may be performed first, followed by step 201 and step 203; or step 203 may be performed first, followed by step 202 and step 201; or step 201, step 202, and step 203 may be performed concurrently. In FIG. 2, as an example for description, step 201, step 202, and step 203 are performed sequentially, and this is not construed as a limitation to the present invention herein.

It can be learned from the description of the present invention in the foregoing embodiment that a base station separately weights, by using a precoding matrix, data streams, a pilot signal, and scheduling information that need to be transmitted to N user terminals, and after completing weighting, transmits to-be-transmitted data streams, to-be-transmitted pilot signals, and to-be-transmitted scheduling information by using K physical transmit antennas of the base station, thereby implementing spatial multiplexing between the N user terminals. Multiple data streams may be multiplexed to the N user terminals by means of weighting with the precoding matrix. In addition, spatial multiplexing is implemented for the pilot signal by means of weighting with the precoding matrix, and the to-be-transmitted pilot signal obtained by means of weighting no longer depends on a CRS for differentiating space-division user terminal layer numbers. Therefore, spatial multiplexing can be performed for more user terminals, and utilization of time-frequency resources can be improved.

**Embodiment 3**

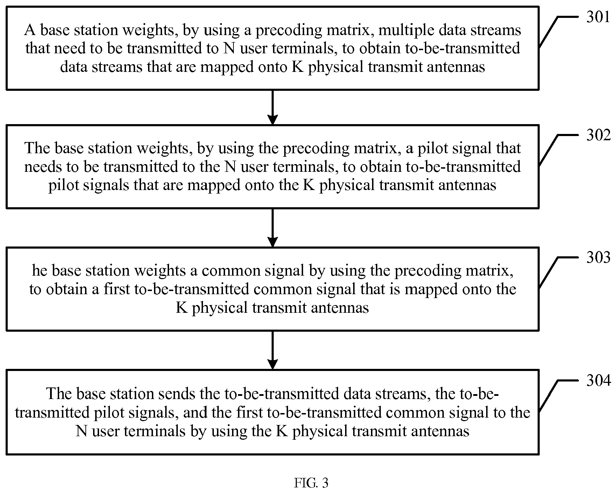

As shown in FIG. 3, a multi-user multiplexing method provided in another embodiment of the present invention may include the following steps.

301. A base station weights, by using a precoding matrix, multiple data streams that need to be transmitted to N user terminals, to obtain to-be-transmitted data streams that are mapped onto K physical transmit antennas.

N and K are natural numbers. The precoding matrix is obtained by means of calculation according to characteristics of channels from the K physical transmit antennas to the N user terminals.

302. The base station weights, by using the precoding matrix, a pilot signal that needs to be transmitted to the N user terminals, to obtain to-be-transmitted pilot signals that are mapped onto the K physical transmit antennas.

Step 301 and step 302 are the same as step 101 and step 102 in the foregoing embodiment, and details are not described herein again.

303. The base station weights a common signal by using the precoding matrix, to obtain a first to-be-transmitted common signal that is mapped onto the K physical transmit antennas.

The to-be-transmitted data stream, the to-be-transmitted pilot signal, and the first to-be-transmitted common signal are mapped onto different time-frequency resources.

In this embodiment of the present invention, to implement spatial multiplexing for multiple user terminals, the base station uses N to denote a quantity of spatial multiplexing user terminals. When the base station transmits the common signal to the user terminals, the base station weights the common signal by using the precoding matrix, to obtain the to-be-transmitted common signal that is mapped onto the K physical transmit antennas. The common signal refers to a signal or a channel that needs to omnidirectionally cover all user terminals. A common signal generated by the base station may be sent to the N user terminals that require spatial multiplexing. To implement spatial multiplexing between the N user terminals, the base station may weight the common signal by using the precoding matrix. Multiple physical transmit antennas are deployed on the base station, and a quantity of the physical transmit antennas is denoted by K. The common signal is weighted by using the precoding matrix into the to-be-transmitted common signal that is mapped onto the K physical transmit antennas.

It should be noted that, in this embodiment of the present invention, the common signal may specifically refer to a signal transmitted on a common channel, or may refer to a signal that is determined by the base station and requires omnidirectional coverage. Specifically, the common signal may be a primary synchronization signal (Primary Synchronization Signal, PSS), or may be a secondary synchronization signal (Secondary Synchronization Signal, SSS). The common signal may be a master information block (Master Information Block, MIB) carried on a physical broadcast channel (Physical Broadcast Channel, PBCH), or may be a system information block (System Information Block, SIB) carried on a physical downlink shared channel (Physical Downlink Shared Channel, PDSCH). Alternatively, the common signal may refer to a paging (Paging) message carried on a physical downlink shared channel (Physical Downlink Shared Channel, PDSCH), or may include SIB scheduling information and paging scheduling information that are carried on a PDCCH (Physical Downlink Control Channel). Alternatively, the common signal may refer to a signal carried on a physical HARQ indicator channel (Physical Hybrid-ARQ Indicator Channel, PHICH) and a physical control format indicator channel (Physical Control Format Indicator Channel, PCFICH). Details are not listed herein.

It should be noted that one or more antenna ports may be configured for the base station. When multiple antenna ports are configured for the base station, a quantity of the antenna ports is denoted by the letter t in this embodiment of the present invention, and t is a positive integer greater than 1. An implementation manner of weighting, by the base station, the pilot signal by using a mapping matrix varies with the quantity of the antenna ports configured for the base station. A specific implementation manner is described in subsequent embodiments.

304. The base station sends the to-be-transmitted data streams, the to-be-transmitted pilot signal, and the first to-be-transmitted common signal to the N user terminals by using the K physical transmit antennas.

In this embodiment of the present invention, after the base station separately obtains the to-be-transmitted data streams, the to-be-transmitted pilot signals, and the first to-be-transmitted common signal by using step 301, step 302, and step 303, a mapping relationship of the data stream, the pilot signal, and the common signal on time-frequency resources does not change. Therefore, the to-be-transmitted data stream, the to-be-transmitted pilot signal, and the first to-be-transmitted common signal are still separately mapped onto different time-frequency resources. The base station may send the to-be-transmitted data streams, the to-be-transmitted pilot signals, and the first to-be-transmitted common signal to the N user terminals by using the K physical transmit antennas. Herein, transmitting the to-be-transmitted data streams, the to-be-transmitted pilot signals, and the first to-be-transmitted common signal by using the K physical transmit antennas refers to transmitting the to-be-transmitted data streams, the to-be-transmitted pilot signals, and the first to-be-transmitted common signal by sharing the K physical transmit antennas. That is, the to-be-transmitted data streams need to be transmitted by using the K physical transmit antennas, the to-be-transmitted pilot signals also need to be transmitted by using the K physical transmit antennas, and the first to-be-transmitted common signal also needs to be transmitted by using the K physical transmit antennas, except that the to-be-transmitted data stream, the to-be-transmitted pilot signal, and the first to-be-transmitted common signal are mapped onto different time-frequency resources. Because the to-be-transmitted data stream, the to-be-transmitted pilot signal, and the first to-be-transmitted common signal occupy different time-frequency resources, as a receive end, the user terminals may determine to obtain a corresponding data stream, pilot signal, and common signal from different time-frequency resources.

It should be noted that, in this embodiment of the present invention, there is no particular time sequence between step 301, step 302, and step 303. Step 301, step 302, and step 303 may be performed sequentially; or step 302 may be performed first, followed by step 301 and step 303; or step 303 may be performed first, followed by step 302 and step 301; or step 301, step 302, and step 303 may be performed concurrently. In FIG. 3, as an example for description, step 301, step 302, and step 303 are performed sequentially, and this is not construed as a limitation to the present invention herein.

In some embodiments of the present invention, when a data stream, scheduling information, a pilot signal, and a common signal are multiplexed, a same precoding matrix is used for mapping. The common signal can be relatively evenly radiated out by reducing a quantity of spatial multiplexing user terminals, so that omnidirectional coverage of the common signal is ensured. In this case, the quantity K of the physical transmit antennas disposed on the base station needs to meet the following condition: K is greater than N.

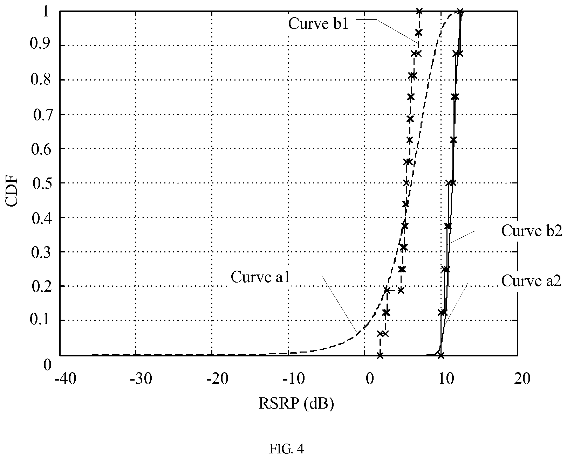

For example, the quantity of the physical transmit antennas is K=16, and the quantity of the user terminals that require spatial multiplexing is N=16. As shown in FIG. 4, FIG. 4 is a schematic diagram of a result of measurement of reference signal received power (Reference Signal Received Power, RSRP) corresponding to various quantities of user terminals according to an embodiment of the present invention. A quantity of user terminals is counted by using a cumulative distribution function (Cumulative Distribution Function, CDF). Because the precoding matrix is designed according to the channels of the spatial multiplexing user terminals, in this case, the antennas of the base station send, by means of beamforming (beamforming), the common signal to the 16 user terminals that require spatial multiplexing, so as to ensure that these user terminals can properly receive the common signal. As shown in a curve a1 and a curve b1 in FIG. 4, the curve a1 indicates a curve of a relationship between various quantities of non-spatial multiplexing user terminals that receive the common signal, and corresponding RSRP, and the curve b1 indicates a curve of a relationship between various quantities of spatial multiplexing user terminals that receive the common signal, and corresponding RSRP. That is, when K=N, the base station may implement directional coverage of the common signal to ensure that all the N user terminals that require spatial multiplexing can receive the common signal. However, other non-spatial multiplexing user terminals generally also need to receive the common signal. Because weight values formed by the precoding matrix in this case may form a null for these non-spatial multiplexing user terminals, received signal strength may be extremely low, and further a coverage hole may be caused. To ensure that both the spatial multiplexing user terminals and the non-spatial multiplexing user terminals can properly receive the common signal, the quantity of the spatial multiplexing user terminals may be reduced in the method used in this embodiment of the present invention, that is, the quantity of the physical transmit antennas is greater than the quantity of the spatial multiplexing user terminals. For example, 16 physical transmit antennas perform spatial multiplexing only for eight user terminals. Because the precoding matrix is designed according to the channels of the spatial multiplexing user terminals, the physical transmit antennas of the base station send, by means of beamforming, the common signal to the eight user terminals that require spatial multiplexing, so as to ensure that these user terminals can properly receive the common signal. However, other non-spatial multiplexing user terminals also need to receive the common signal. In this case, because the quantity of the physical transmit antennas is greater than the quantity of the spatial multiplexing user terminals, the non-spatial multiplexing user terminals can also properly receive the common signal. As shown in a curve a2 and a curve b2 in FIG. 4, the curve a2 indicates a curve of a relationship between various quantities of non-spatial multiplexing user terminals that receive the common signal, and corresponding RSRP, and the curve b2 indicates a curve of a relationship between various quantities of spatial multiplexing user terminals that receive the common signal, and corresponding RSRP. In this case, because the quantity of the spatial multiplexing user terminals is less than the quantity of the physical transmit antennas, relatively few beamforming directions are formed, and it can be ensured that the common signal is more evenly radiated out in all directions, and a probability of a coverage hole is effectively reduced. It can be learned from the curve a2 that received signal strength is high enough even for the non-spatial multiplexing user terminals, and therefore the non-spatial multiplexing user terminals can also properly receive the common signal.

It can be learned from the description of the present invention in the foregoing embodiment that, a base station separately weights, by using a precoding matrix, data streams, a pilot signal, and a common signal that need to be transmitted to N user terminals, and after completing weighting, transmits to-be-transmitted data streams, to-be-transmitted pilot signals, and a first to-be-transmitted common signal by using K physical transmit antennas of the base station, thereby implementing spatial multiplexing between the N user terminals. Multiple data streams may be multiplexed to the N user terminals by means of weighting with the precoding matrix. In addition, spatial multiplexing is implemented for the pilot signal by means of weighting with the precoding matrix, and the to-be-transmitted pilot signal obtained by means of weighting no longer depends on a CRS for differentiating space-division user terminal layer numbers. Therefore, spatial multiplexing can be performed for more user terminals, and utilization of time-frequency resources can be improved.

It should be noted that, in another embodiment of the present invention, step 303 may also be replaced with the following step:

303a. The base station weights a common signal by using the precoding matrix or a mapping matrix in a time-division manner, to obtain a second to-be-transmitted common signal that is mapped onto the K physical transmit antennas.

The mapping matrix remains unchanged when the channel characteristics or scheduled user terminals change, and the to-be-transmitted data stream, the to-be-transmitted pilot signal, and the second to-be-transmitted common signal are mapped onto different time-frequency resources.

That is, a difference between step 303a and step 303 is that, in step 303a, the weighting of the common signal is completed by using the mapping matrix or the precoding matrix. To distinguish from the first to-be-transmitted common signal that is generated by weighting the common signal by using the precoding matrix in step 303, a signal generated in step 303a by weighting the common signal by using the precoding matrix or the precoding matrix in a time-division manner is defined as the second to-be-transmitted common signal. Weight values of the mapping matrix used to weight the common signal remain unchanged when the channel characteristics or the scheduled user terminals change.

When the foregoing mapping matrix is used in a scenario of implementation of weighting a common signal, the mapping matrix used by the base station is constant, that is, when the characteristics of the channel from the K physical transmit antennas to the N user terminals change or the scheduled user terminals change, the base station still uses the original mapping matrix to weight the common signal. In the foregoing embodiment from step 301 to step 303, the base station uses a same precoding matrix to weight the data streams, the pilot signal, and the common signal. The precoding matrix used by the base station is not constant, that is, when the characteristics of the channel from the K physical transmit antennas to the N user terminals change or the scheduled user terminals change, the base station recalculates weight values of the precoding matrix used to weight the data streams, the pilot signal, and the common signal.

In the foregoing embodiment of step 303a, the base station does not always use the mapping matrix to weight the common signal, but uses the mapping matrix in some time periods to weight the common signal, and uses the precoding matrix in other time periods to weight the common signal. For example, the precoding matrix used to weight the data streams, the pilot signal, and the common signal is a matrix 1. In the embodiment of performing step 303, the base station uses the matrix 1 in a time period to weight the common signal. The mapping matrix used by the base station in another time period is a matrix 2. The base station weights the common signal by using the matrix 2. The matrix 2 is a matrix that remains unchanged when the channel characteristics or the scheduled user terminals change. The base station may weight the common signal by using the matrix 1 and the matrix 2 in a time-division manner, that is, using the matrix 1 within a preset time period and using the matrix 2 beyond the preset time period. By using different precoding matrices in a time-division manner, the base station can implement directional transmission and omnidirectional transmission of the common signal.

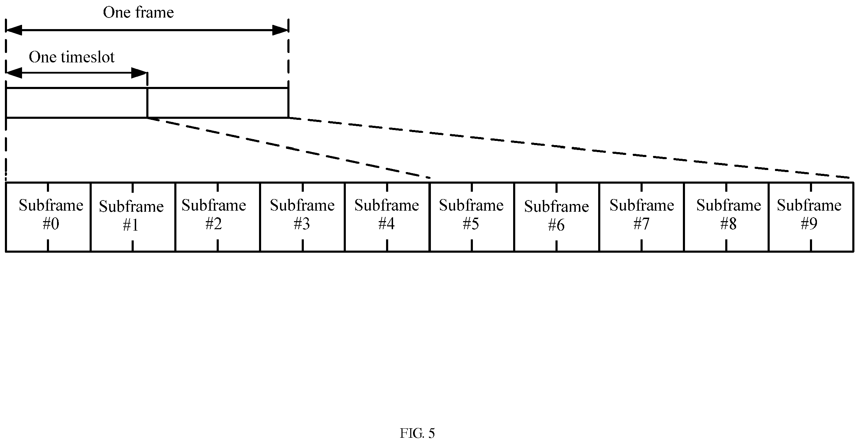

For example, the multi-user multiplexing method provided in this embodiment of the present invention is applied to an LTE system. The base station may separately weight, in different subframes of a same frame, the common signal by using the matrix 1 and the matrix 2. As shown in FIG. 5, FIG. 5 is a schematic structural diagram of a time division duplex (Time Division Duplex, TDD) frame according to an embodiment of the present invention. The base station transmits a common signal in each subframe of a frame, so that a Rel-8 LTE TDD terminal can properly access a system to perform communication and obtain a gain of a large-scale multi-user multiplexing system. One frame (which may also be referred to as a radio frame) takes up 10 milliseconds. One frame includes two timeslots (time slots), consisting of 10 subframes, which are a subframe #0, a subframe #1, a subframe #2, a subframe #3, a subframe #4, a subframe #5, a subframe #6, a subframe #7, a subframe #8, and a subframe #9, respectively. Each subframe takes up 1 millisecond and may be configured for downlink transmission or uplink transmission. In this embodiment of the present invention, the common signal is centered in the subframe #0 and/or the subframe #5 by means of scheduling and parameter configuration, and the common signal is weighted by using the matrix 2 in the subframe #0 and/or the subframe #5. The common signal is weighted by using the matrix 1 in other subframes except the subframe #0 and the subframe #5.

In some embodiments of the present invention, when the common signal is specifically a primary synchronization signal or a secondary synchronization signal, the mapping matrix is a K×1 column vector with all Is. The primary synchronization signal or the secondary synchronization signal requires omnidirectional coverage, so as to ensure that all user terminals in a cell can receive the primary synchronization signal or the secondary synchronization signal, and therefore the mapping matrix may be designed as a K×1 column vector with all Is. Such a configuration can ensure that not only N user terminals that require spatial multiplexing in the cell can receive the common signal, but also another user in the cell can receive the common signal.

It should be noted that, in the foregoing embodiment, after separately weighting the data streams, the pilot signal, the scheduling information, and the common signal, the base station may map the common signal, the data stream, the scheduling information, and the pilot signal onto different time-frequency resources. As shown in FIG. 6-a, FIG. 6-a is a schematic diagram of a mapping process of multiplexing a common signal, a data stream, scheduling information, and a pilot signal by a base station. That the base station weights the common signal by using a precoding matrix is used as an example for description of the figure. Certainly, the common signal may also be weighted by using a mapping matrix. FIG. 6-b is a schematic diagram of a processing process of receiving a common signal, a data stream, scheduling information, and a pilot signal by each user terminal. N user terminals that require spatial multiplexing are UE 1, UE 2, ..., UE N, respectively. The base station separately weights, by using a precoding matrix, a common signal, data streams, scheduling information, and a pilot signal, to obtain a first to-be-transmitted common signal, to-be-transmitted data streams, to-be-transmitted scheduling information, and to-be-transmitted pilot signals, and then map them onto different time-frequency resources, and send them to the N user terminals by using K physical transmit antennas of the base station. As a receive end, the UE 1, the UE 2, ..., and the UE N separately receive the common signal and their respective data stream, scheduling information, and pilot signal from the time-frequency resources.

**Embodiment 4**

First, for a case in which one antenna port is configured for a base station, manners of transmitting a data stream, a pilot signal, scheduling information, and a common signal are separately described by using an example in this embodiment of the present invention. A multi-user multiplexing method provided in this embodiment of the present invention may specifically include the following steps.

Step S01: If one antenna port is configured for a base station, the base station weights N data streams in the following manner:

$$[X_1, X_2, ... X_K] = [V_1, V_2, ... V_N] \times [s_1; s_2; ...; s_N];$$

further,

$$[V_1, V_2, ... V_N] \times [s_1; s_2; ...; s_N] = V_1 \times s_1 + V_2 \times s_2 + ... + V_N \times s_N;$$

where

$[X_1, X_2, ... X_K]$ is to-be-transmitted data streams, $[V_1, V_2, ... V_N]$ is a $K \times N$ precoding matrix, any column of $[V_1, V_2, ... V_N]$ is denoted by $V_i$, i is a positive integer greater than 0 and less than or equal to N, $V_i$ is a total of $l_i$ precoding value vectors assigned by the base station to the ith user terminal of N user terminals, $V_i$ is a $K \times 1$ column vector, $[s_1; s_2; ...; s_N]$ is the N data streams denoted by an $N \times 1$ column vector, and $s_i$ is a data stream that needs to be transmitted by the base station to the ith user terminal of the N user terminals.

That is, when antenna port configuration information broadcast by the base station indicates that a quantity of antenna ports is 1, step 101 in the foregoing embodiment may be specifically step S01. If a quantity of user terminals that require spatial multiplexing is N, a quantity of data streams generated by the base station is also N. The N data streams and the N user terminals are in one-to-one correspondence, that is, one data stream is sent to one user terminal. The precoding matrix is denoted by $[V_1, V_2, ... V_N]$. Each precoding value vector of $V_1$, $V_2$, ..., and $V_N$ indicates a precoding value vector assigned by the base station to one user terminal. Dynamic value changes of i are used to indicate all the N user terminals, i is a positive integer greater than 0 and less than or equal to N, and a value of i is any positive integer of 1, 2, 3, ..., or N. A precoding value vector assigned by the base station to the ith user terminal is $V_i$, where $V_i$ is a $K \times 1$ column vector. The N data streams generated by the base station are denoted by $[s_1; s_2; ...; s_N]$, where $[s_1; s_2; ...; s_N]$ is an $N \times 1$ column vector, $s_1$, $s_2$, ..., and $s_N$ indicate the data streams generated by the base station for the N user terminals. Dynamic value changes of i are used to indicate all the N user terminals, i is a positive integer greater than 0 and less than or equal to N, and a value of i is any positive integer of 1, 2, 3, ..., or N. A data stream generated by the base station for the ith user terminal is $s_i$. $[V_1, V_2, ... V_N]$ is multiplied by $[s_1; s_2; ...; s_N]$ to obtain $[X_1, X_2, ... X_K]$, and each column of $[X_1, X_2, ... X_K]$ indicates a data stream transmitted on one physical transmit antenna. This is equivalent to multiplying all precoding value vectors by the data streams denoted by the column vectors, thereby implementing weighting of the N data streams by using the precoding matrix, to obtain the to-be-transmitted data streams that are mapped onto K physical transmit antennas. Because the precoding matrix has $K \times N$ dimensions, by multiplying the precoding matrix by the N data streams, all the data streams can be mapped onto the K physical transmit antennas. For the N user terminals that require spatial multiplexing, the N data streams that need to be transmitted to the N user terminals can be mapped onto the K physical transmit antennas.

Step S02: If one antenna port is configured for the base station, the base station weights a pilot signal in the following manner:

$$Y_0 = \text{sum}([V_1, V_2, ... V_N]) \times p_0;$$

further,

$$\text{sum}([V_1, V_2, ... V_N]) \times p_0 = V_1 \times p_0 + V_2 \times p_0 + ... + V_N \times p_0;$$

where

$Y_0$ is to-be-transmitted pilot signals, $[V_1, V_2, ... V_N]$ is a $K \times N$ precoding matrix, $\text{sum}([V_1, V_2, ... V_N])$ is a result obtained by performing a summation operation on column vectors in all columns of $[V_1, V_2, ... V_N]$, any column of $[V_1, V_2, ... V_N]$ is denoted by $V_i$, i is a positive integer greater than 0 and less than or equal to N, $V_i$ is a total of $l_i$ precoding value vectors assigned by the base station to the ith user terminal of the N user terminals, $V_i$ is a $K \times 1$ column vector, and $p_0$ is the pilot signal.

That is, when antenna port configuration information broadcast by the base station indicates that a quantity of antenna ports is 1, step 102 in the foregoing embodiment may be specifically step S02. If a quantity of user terminals that require spatial multiplexing is N, the base station weights the pilot signal by using all precoding value vectors of the precoding matrix, to generate N different to-be-transmitted pilot signals that are weighted by using the precoding value vectors. The precoding matrix is denoted by $[V_1,V_2,...V_N]$. Each precoding value vector of $V_1$, $V_2$, ..., and $V_N$ indicates a precoding value vector assigned by the base station to one user terminal. Dynamic value changes of i are used to indicate all the N user terminals, i is a positive integer greater than 0 and less than or equal to N, and a value of i is any positive integer of 1, 2, 3, ..., or N. A precoding value vector assigned by the base station to the $i^{th}$ user terminal is $V_i$, where $V_i$ is a K$\times$1 column vector. The pilot signal generated by the base station is denoted by $p_0$. Multiplying sum($[V_1,V_2,...V_N]$) by $p_0$ is equivalent to multiplying all the precoding value vectors by the pilot signal, thereby implementing weighting of the pilot signal by using the precoding matrix, to obtain N to-be-transmitted pilot signals that are mapped onto the K physical transmit antennas. The precoding matrix has K$\times$N dimensions, and by multiplying the precoding matrix by the pilot signal, the pilot signal is mapped onto the K physical transmit antennas.

Step S03: If one antenna port is configured for the base station, the base station weights N pieces of scheduling information in the following manner:

$$[Z_1,Z_2,...Z_K] = [V_1,V_2,...V_N] \times [g_1;g_2;...;g_N];$$

further,

$$[V_1,V_2,...V_N] \times [g_1;g_2;...;g_N] = V_1 \times g_1 + V_2 \times g_2 + ... + V_N \times g_N;$$

where

$[Z_1,Z_2,...Z_K]$ is to-be-transmitted scheduling information, $Z_i$ is to-be-transmitted scheduling information assigned by the base station to the $i^{th}$ user terminal of the N user terminals, $[V_1,V_2,...V_N]$ is a K$\times$N precoding matrix, any column of $[V_1,V_2,...V_N]$ is denoted by $V_i$, i is a positive integer greater than 0 and less than or equal to N, $V_i$ is a total of $l_i$ precoding value vectors assigned by the base station to the $i^{th}$ user terminal of the N user terminals, $V_i$ is a K$\times$1 column vector, $[g_1;g_2;...;g_N]$ is the N pieces of scheduling information denoted by an N$\times$1 column vector, and $g_i$ is scheduling information that needs to be transmitted by the base station to the $i^{th}$ user terminal of the N user terminals.

That is, when antenna port configuration information broadcast by the base station indicates that a quantity of antenna ports is 1, step 203 in the foregoing embodiment may be specifically step S03. If a quantity of user terminals that require spatial multiplexing is N, a quantity of pieces of scheduling information generated by the base station is also N. The N pieces of scheduling information are corresponding to the N user terminals, that is, one piece of scheduling information is sent to one user terminal. The precoding matrix is denoted by $[V_1,V_2,...V_N]$. Each precoding value vector of $V_1$, $V_2$, ..., and $V_N$ indicates a precoding value vector assigned by the base station to one user terminal. Dynamic value changes of i are used to indicate all the N user terminals, i is a positive integer greater than 0 and less than or equal to N, and a value of i is any positive integer of 1, 2, 3, ..., or N. A precoding value vector assigned by the base station to the $i^{th}$ user terminal is $V_i$, where $V_i$ is a K$\times$1 column vector. The N pieces of scheduling information generated by the base station are denoted by $[g_1;g_2;...;g_N]$. Each column vector of $g_1$, $g_2$, ..., and $g_N$ indicates scheduling information generated by the base station for one user terminal. Dynamic value changes of i are used to indicate all the N user terminals, i is a positive integer greater than 0 and less than or equal to N, and a value of i is any positive integer of 1, 2, 3, ..., or N. Scheduling information generated by the base station for the $i^{th}$ user terminal is $g_i$. Multiplying $[V_1,V_2,...V_N]$ by $[g_1;g_2;...;g_N]$ is equivalent to multiplying all precoding value vectors by the scheduling information denoted by the column vectors, thereby implementing weighting of the N pieces of scheduling information by using the precoding matrix, to obtain to-be-transmitted scheduling information that is mapped onto the K physical transmit antennas. Therefore, for the N user terminals that require spatial multiplexing, the N pieces of scheduling information that need to be sent to the N user terminals are mapped onto the K physical transmit antennas.

Step S04: If one antenna port is configured for the base station, the base station weights the common signal in the following manner:

$$P = \text{sum}([V_1,V_2,...V_N]) \times c;$$

further,

$$\mathrm{sum}([V_1, V_2, ... V_N]) \times c = V_1 \times c + V_2 \times c + ... + V_N \times c;$$

where

P is a first to-be-transmitted common signal, $[V_1, V_2, ... V_N]$ is a K×N precoding matrix, any column of $[V_1, V_2, ... V_N]$ is denoted by $V_i$, i is a positive integer greater than 0 and less than or equal to N, $V_i$ is a total of $I_i$ precoding value vectors assigned by the base station to the ith user terminal of the N user terminals, $V_i$ is a K×1 column vector, $\mathrm{sum}([V_1, V_2, ... V_N])$ is a result obtained by performing a summation operation on column vectors in all columns of $[V_1, V_2, ... V_N]$, and c is the common signal.

That is, when antenna port configuration information broadcast by the base station indicates that a quantity of antenna ports is 1, step 303 in the foregoing embodiment may be specifically step S04. If a quantity of user terminals that require spatial multiplexing is N, the precoding matrix is denoted by $[V_1, V_2, ... V_N]$. Each precoding value vector of $V_1$, $V_2$, ..., and $V_N$ indicates a precoding value vector assigned by the base station to one user terminal. Dynamic value changes of i are used to indicate all the N user terminals, i is a positive integer greater than 0 and less than or equal to N, and a value of i is any positive integer of 1, 2, 3, ..., or N. A precoding value vector assigned by the base station to the ith user terminal is $V_i$, where $V_i$ is a K×1 column vector. The base station generates N data streams. A common signal is denoted by c. Multiplying $\mathrm{sum}([V_1, V_2, ... V_N])$ by c is equal to multiplying all precoding value vectors by the common signal, thereby implementing weighting of the common signal by using the precoding matrix, to obtain a first to-be-transmitted common signal that is mapped onto the K physical transmit antennas.

S05: The base station sends the to-be-transmitted data streams, the to-be-transmitted pilot signals, the to-be-transmitted scheduling information, and the first to-be-transmitted common signal to the N user terminals by using the K physical transmit antennas.

In this embodiment of the present invention, after the base station separately obtains the to-be-transmitted data streams, the to-be-transmitted pilot signals, the to-be-transmitted scheduling information, and the first to-be-transmitted common signal by using step S01 to step S04, a mapping relationship of the data stream, the pilot signal, the scheduling information, and the common signal on time-frequency resources does not change. Therefore, the to-be-transmitted data stream, the to-be-transmitted pilot signal, the to-be-transmitted scheduling information, and the first to-be-transmitted common signal are still separately mapped onto different time-frequency resources. The base station may send the to-be-transmitted data streams, the to-be-transmitted pilot signals, the to-be-transmitted scheduling information, and the first to-be-transmitted common signal to the N user terminals by using the K physical transmit antennas. Because the to-be-transmitted data stream, the to-be-transmitted pilot signal, the to-be-transmitted scheduling information, and the first to-be-transmitted common signal occupy different time-frequency resources, as a receive end, the user terminals may determine to obtain a corresponding data stream, pilot signal, scheduling information, and common signal from different time-frequency resources.

**Embodiment 5**

First, for a case in which t antenna ports are configured for a base station, where t is a positive integer greater than 1, manners of transmitting a data stream, a pilot signal, scheduling information, and a common signal are separately described by using an example in this embodiment of the present invention. A multi-user multiplexing method provided in this embodiment of the present invention may specifically include the following steps.

Step S11: If t antenna ports are configured for a base station, the base station weights M data streams in the following manner:

$$[X_1, X_2, ... X_K] = [V_1, V_2, ... V_N] \times [s_1; s_2; ...; s_N];$$

further,

$$[V_1, V_2, ... V_N] \times [s_1; s_2; ...; s_N] = V_1 \times s_1 + V_2 \times s_2 + ... + V_N \times s_N;$$

where

$[X_1, X_2, ... X_K]$ is to-be-transmitted data streams, $[V_1, V_2, ... V_N]$ is a K×M precoding matrix, any column of $[V_1, V_2, ... V_N]$ is denoted by $V_i$, i is a positive integer greater than 0 and less than or equal to N, $V_i$ is a $K \times I_i$ matrix, $V_i$ is a total of $I_i$ precoding value vectors assigned by the base station to the ith user terminal of N user terminals, $I_i$ is greater than or equal to 1, $[s_1; s_2; ...; s_N]$ is the M data streams denoted by an M×1 column vector, any column of $[s_1; s_2; ...; s_N]$ is denoted

by $s_i$, $s_i$ is an $l_i \times 1$ column vector, $s_i$ is a total of $l_i$ layers of data streams that need to be transmitted by the base station to the $i^{th}$ user terminal of the N user terminals, and M is greater than or equal to N.

That is, when antenna port configuration information broadcast by the base station indicates that a quantity of antenna ports is greater than 1, step 101 in the foregoing embodiment may be specifically step S11. For the N user terminals, a quantity of data streams for spatial multiplexing is M. M is greater than or equal to N, and meets a requirement that M is obtained by means of summation on $l_i$ when different values are assigned to i. When M is equal to N, one data stream generated by the base station needs to be transmitted to one terminal. When M is greater than N, at least two data streams need to be transmitted to one user terminal, the base station sends at least one data stream to each user terminal, and the M data streams are separately corresponding to all the N user terminals. The precoding matrix is still denoted by $[V_1, V_2, ... V_N]$. Each precoding value vector of $V_1$, $V_2$, ..., and $V_N$ indicates a precoding value vector assigned by the base station to one user terminal. Dynamic value changes of i are used to indicate all the N user terminals, i is a positive integer greater than 0 and less than or equal to N, and a value of i is any positive integer of 1, 2, 3, ..., or N. A precoding value vector assigned by the base station to the $i^{th}$ user terminal is $V_i$, where $V_i$ is a $K \times l_i$ matrix. $V_i$ is a total of $l_i$ precoding value vectors assigned by the base station to the $i^{th}$ user terminal of the N user terminals. That is, for the $i^{th}$ user terminal, if the base station needs to transmit one data stream to the user terminal, a value of $l_i$ is 1, and if the base station needs to transmit two data streams to the user terminal, a value of $l_i$ is 2. The M data streams generated by the base station are denoted by $[s_1; s_2; ...; s_N]$, and $s_1$, $s_2$, ..., and $s_N$ respectively denote data streams generated by the base station for the N user terminals. Dynamic value changes of i are used to indicate all the N user terminals, i is a positive integer greater than 0 and less than or equal to N, and a value of i is any positive integer of 1, 2, 3, ..., or N. A data stream generated by the base station for the $i^{th}$ user terminal is $s_i$, and $s_i$ is an $l_i \times 1$ column vector. For the $i^{th}$ user terminal, if the base station needs to transmit one data stream to the user terminal, a value of $l_i$ is 1, and if the base station needs to transmit two data streams to the user terminal, a value of $l_i$ is 2, indicating that the base station needs to transmit a total of two layers of data streams to the user terminal. Multiplying $[V_1, V_2, ... V_N]$ by $[s_1; s_2; ...; s_N]$ is equal to multiplying all precoding value vectors by the data streams denoted by the column vectors, thereby implementing weighting of the M data streams by using the precoding matrix, to obtain the to-be-transmitted data streams that are mapped onto the K physical transmit antennas. Because the precoding matrix has $K \times M$ dimensions, by multiplying the precoding matrix by the M data streams, all the data streams can be mapped onto the K physical transmit antennas. For the N user terminals that require spatial multiplexing, the M data streams that need to be transmitted to N user terminals are mapped onto the K physical transmit antennas.

Step S12: If t antenna ports are configured for the base station, the base station separately maps a pilot signal to the t antenna ports, where a pilot signal on the $(m-1)^{th}$ antenna port is mapped onto the K physical transmit antennas in the following manner:

$$Y_{(m-1)} = sum([V_1(:,m), V_2(:,m), ... V_N(:,m)]) \times p_{(m-1)};$$

further,

$$sum([V_1(:,m), V_2(:,m), ... V_N(:,m)]) \times p_{(m-1)}$$
$$= V_1(:,m) \times p_{(m-1)} + V_2(:,m) \times p_{(m-1)} + ... + V_N(:,m) \times p_{(m-1)};$$

where

$Y_{(m-1)}$ is a to-be-transmitted pilot signal that is mapped onto the $(m-1)^{th}$ antenna port, $[V_1, V_2, ... V_N]$ is a $K \times M$ precoding matrix, any column of $[V_1, V_2, ... V_N]$ is denoted by $V_i$, i is a positive integer greater than 0 and less than or equal to N, $V_i$ is a $K \times l_i$ matrix, $V_i$ is a total of $l_i$ precoding value vectors assigned by the base station to the $i^{th}$ user terminal of the N user terminals, and when $m \le l_i$, $V_i(:,m)$ denotes the $m^{th}$ column vector of $V_i$, and when $m > l_i$, $V_i(:,m)$ is a $K \times 1$ vector with all 0s, where m is a positive integer greater than or equal to 1 and less than or equal to t, $sum([V_1(:,m), V_2(:,m), ... V_N(:,m)])$ is a result obtained by performing a summation operation on column vectors in all columns of $[V_1(:,m), V_2(:,m), ... V_N(:,m)]$, and $p_{(m-1)}$ is a pilot signal corresponding to the $(m-1)^{th}$ port.

That is, when antenna port configuration information broadcast by the base station indicates that a quantity of antenna ports is greater than 1, step 102 in the foregoing embodiment may be specifically step S12. If a quantity of user terminals that require spatial multiplexing is N, the base station sends one or more pilot signals to each user terminal. The precoding matrix is still denoted by $[V_1, V_2, ... V_N]$. Each precoding value vector of $V_1$, $V_2$, ..., and $V_N$ indicates a precoding value vector assigned by the base station to one user terminal. Dynamic value changes of i are used to indicate all the N user terminals, i is a positive integer greater than 0 and less than or equal to N, and a value of i is any positive integer of 1, 2, 3, ..., or N. A precoding value vector assigned by the base station to the $i^{th}$ user terminal is $V_i$,

where $V_i$ is a $K \times I_i$ matrix. $V_i$ is a total of $I_i$ precoding value vectors assigned by the base station to the $i^{th}$ user terminal of the N user terminals. A quantity of antenna ports configured for the base station is t. A value of m is any integer from 1 to t, and a value of m may be less than a quantity of antenna ports configured for the base station. For example, when the base station configures $I_i$ pilot signals for the $i^{th}$ user terminal, when $m \leq I_i$, $V_i$ (:,m) denotes the $m^{th}$ column vector of $V_i$, and when $m > I_i$, $V_i$ (:,m) is a $K \times 1$ zero vector. That is, if the base station does not have a pilot signal for the user terminal on a resource block at a specific frequency, $p_{(m-1)}$=0. A value of m is any positive integer of 1, 2, 3, ..., or t, and $p_{(m-1)}$ is a pilot signal corresponding to the $(m-1)^{th}$ port. Therefore, po is a pilot signal corresponding to the $0^{th}$ port, and $p_1$ is a pilot signal corresponding to the first port. Mapping onto the $(m-1)^{th}$ antenna port may be implemented by multiplying sum($[V_1$ (:,m),$V_2$ (:,m),... $V_N$ (:,m)]) by $p_{(m-1)}$. This is equal to multiplying all precoding value vectors by a pilot signal corresponding to the antenna port, thereby implementing weighting of the pilot signal by using the precoding matrix, to obtain t to-be-transmitted pilot signals that are mapped onto the K physical transmit antennas.

Step S13: If t antenna ports are configured for the base station, the base station performs space frequency block coding on the scheduling information that needs to be transmitted to the N user terminals, to obtain N code blocks that are respectively corresponding to the N user terminals, where a code block corresponding to the $i^{th}$ user terminal is $[g_i$ (1),..., $g_i$ (m) ..., $g_i$ (t)], i is a positive integer greater than 0 and less than or equal to N, m is a positive integer greater than 0 and less than or equal to t, and $g_i$ (m) denotes an information symbol that needs to be mapped onto the $(m-1)^{th}$ antenna port after the space frequency block coding.

Step S14: The base station separately maps, to the t antenna ports, the code blocks that are corresponding to all the user terminals, where the $m^{th}$ code block of the N user terminals is mapped onto the $(m-1)^{th}$ antenna port in the following manner:

$$[Z_{i,1}, Z_{i,2}, ... Z_{i,K}] = [V_1 (:,m), V_2 (:,m), ... V_N (:,m)] \times [g_1 (m); ...; g_N (m)];$$

further,

$$[V_1 (:,m), V_2 (:,m), ... V_N (:,m)] \times [g_1 (m); ...; g_N (m)]$$

$$= V_1 (:,m) \times g_1 (m) + V_2 (:,m) \times g_2 (m) + ... + V_N (:,m) \times g_N (m);$$

where

$[Z_{i,1}, Z_{i,2}, ... Z_{i,K}]$ is to-be-transmitted scheduling information assigned by the base station to the $i^{th}$ user of the N user terminals, $[V_1, V_2, ... V_N]$ is a $K \times M$ precoding matrix, any column of $[V_1, V_2, ... V_N]$ is denoted by $V_i$, i is a positive integer greater than 0 and less than or equal to N, $V_i$ is a $K \times I_i$ matrix, $V_i$ is a total of $I_i$ precoding value vectors assigned by the base station to the $i^{th}$ user terminal of the N user terminals, and m is a positive integer greater than 0 and less than or equal to t, and when $m \leq I_i$, $V_i$ (:,m) denotes the $m^{th}$ column vector of $V_i$, and when $m > I_i$, $V_i$ (:,m) is a $K \times 1$ vector with all 0s.

That is, when antenna port configuration information broadcast by the base station indicates that a quantity of antenna ports is t, step 203 in the foregoing embodiment may be specifically step S13 and step S14. If a quantity of user terminals that require spatial multiplexing is N, a quantity of pieces of scheduling information generated by the base station is N. The base station sends one piece of scheduling information to each user terminal. The base station performs space frequency block coding on the scheduling information that needs to be transmitted to the N user terminals, to obtain the N code blocks that are respectively corresponding to the N user terminals. A code block corresponding to the $i^{th}$ user terminal is $[g_i$ (1),..., $g_i$ (m) ..., $g_i$ (t)]. Dynamic value changes of i are used to indicate all the N user terminals, i is a positive integer greater than 0 and less than or equal to N, and a value of i is any positive integer of 1, 2, 3, ..., or N. After space frequency block coding, scheduling information generated by the base station for the $i^{th}$ user terminal is denoted by $[g_i$ (1),..., $g_i$ (m) ..., $g_i$ (t)]. A value of m is any value of 1, 2, ..., or t. For example, when t is 4, a value of m may be 1, 2, 3, or 4. The precoding matrix is still denoted by $[V_1, V_2, ... V_N]$. It should be noted that, when a quantity of data streams configured by the base station for the $i^{th}$ user terminal is $I_i$, when $m \leq I_i$, $V_i$ (:,m) denotes the $m^{th}$ column vector of $V_i$, and when $m > I_i$, $V_i$ (:,m) is a $K \times 1$ zero vector. Each precoding value vector of $V_1$, $V_2$, ..., and $V_N$ indicates a precoding value vector assigned by the base station to one user terminal. Dynamic value changes of i are used to indicate all the N user terminals, i is a positive integer greater than 0 and less than or equal to N, and a value of i is any positive integer of 1, 2, 3, ..., or N. A precoding value vector assigned by the base station to the $i^{th}$ user terminal is $V_i$, where $V_i$ is a $K \times I_i$ matrix. $V_i$ is a total of $I_i$ precoding value vectors assigned by the base station to the $i^{th}$ user terminal of the N user terminals. Multiplying $[V_1$ (:,m),$V_2$ (:,m),... $V_N$ (:,m)] by $[g_1$ (m);...;$g_N$ (m)] is equal to multiplying all the precoding value vectors by scheduling information denoted by column vectors, thereby implementing weighting of the N pieces of scheduling information by using the precoding matrix, to obtain to-be-transmitted scheduling information that is mapped onto the K physical transmit antennas. In addition, by multiplying the precoding matrix by the N pieces of scheduling information, all pieces of scheduling information can be mapped onto the K physical transmit antennas, and then the N pieces of scheduling information that are corresponding to the N user terminals are mapped onto the K physical transmit antennas.

For example, the first code block $g_i(1)$ that needs to be mapped onto a port 0 is mapped in the following manner:

$$[V_1(:,1), V_2(:,1),...V_N(:,1)] \times [g_1(1);...; g_N(1)]$$

$$= V_1(:,1) \times g_1(1) + V_2(:,1) \times g_2(1) + ... + V_N(:,1) \times g_N(1);$$

the second code block $g_i(2)$ that needs to be mapped onto a port 1 is mapped in the following manner:

$$[V_1(:,2), V_2(:,2),...V_N(:,2)] \times [g_1(2);...; g_N(2)]$$

$$= V_1(:,2) \times g_1(2) + V_2(:,2) \times g_2(2) + ... + V_N(:,2) \times g_N(2);$$

...

the $m^{th}$ code block that needs to be mapped onto the $(m-1)^{th}$ port is mapped in the following manner:

$$[V_1(:,m), V_2(:,m),...V_N(:,m)] \times [g_1(m);...;g_N(m)]$$

$$= V_1(:,m) \times g_1(m) + V_2(:,m) \times g_2(m) + ... + V_N(:,m) \times g_N(m).$$

It should be noted that, in this embodiment of the present invention, a quantity of code blocks is the same as a quantity of antenna ports. For example, when four antenna ports are configured for the base station, serial numbers of antenna ports start from 0, and are respectively $p_0$, $p_1$, $p_2$, and $p_3$. Serial numbers of user terminals, data streams, and code blocks all start from 1, for example, code blocks may be denoted by $g_1$, $g_2$, $g_3$, and $g_4$.

Step S15: If t antenna ports are configured for the base station, the base station performs space frequency block coding on the common signal to obtain t coded information symbols that are corresponding to the t antenna ports, where a coded information symbol that is corresponding to the $(m-1)^{th}$ antenna port is denoted by $c_m$, and m is a positive integer greater than 0 and less than or equal to t.

Step S16: The base station separately maps, to the t antenna ports, the code blocks that are corresponding to all the user terminals, where the $m^{th}$ code block is mapped onto the $(m-1)^{th}$ antenna port in the following manner:

$$P_m = sum([V_1(:,m), V_2(:,m),...V_N(:,m)]) \times c_m;$$

further,

$$sum([V_1(:,m), V_2(:,m),...V_N(:,m)]) \times c_m$$

$$= V_1(:,m) \times c_m + V_2(:,m) \times c_m + ... + V_N(:,m) \times c_m;$$

where

$P_m$ is a first to-be-transmitted common signal that is mapped onto the $(m-1)^{th}$ antenna port, $[V_1, V_2,...V_N]$ is a K×M precoding matrix, any column of $[V_1, V_2,...V_N]$ is denoted by $V_i$, i is a positive integer greater than 0 and less than or equal to N, $V_i$ is a K×$l_i$ matrix, $V_i$ is a total of $l_i$ precoding value vectors assigned by the base station to the $i^{th}$ user terminal of the N user terminals, and when m ≤ $l_i$, $V_i(:,m)$ denotes the $m^{th}$ column vector of $V_i$, and when m > $l_i$, $V_i(:,m)$ is a K×1 vector with all 0s, where m is a positive integer greater than or equal to 1 and less than or equal to t, sum($[V_1(:,m), V_2(:,m),... V_N(:,m)]$) is a result obtained by performing a summation operation on column vectors in all columns of $[V_1(:,m), V_2(:,m),... V_N(:,m)]$, and $c_m$ is a common signal corresponding to the $(m-1)^{th}$ port.

That is, when antenna port configuration information broadcast by the base station indicates that a quantity of antenna ports is greater than 1, step 303 in the foregoing embodiment may be specifically step S15 and step S16. If a quantity of user terminals that require spatial multiplexing is N, the base station performs space frequency block coding on the common signal to obtain the N code blocks that are respectively corresponding to the N user terminals. A code block corresponding to the $i^{th}$ user terminal is $c_i$. Dynamic value changes of i are used to indicate all the N user terminals, i is a positive integer greater than 0 and less than or equal to N, and a value of i is any positive integer of 1, 2, 3, ..., or N. The $m^{th}$ code block generated by the base station for the user terminal after space frequency block coding is performed on the common signal is denoted by $c_m$. A value of m is 1, 2, ..., or t. For example, when t is 4, a value of m may be 1, 2, 3, or 4. When a quantity of common signals configured by the base station for the $i^{th}$ user terminal is $l_i$, when $m \le l_i$, $V_i$ (:,m) denotes the $m^{th}$ column vector of $V_i$, and when $m > l_i$, $V_i$ (:,m) is a $K \times 1$ zero vector. The precoding matrix is still denoted by $[V_1, V_2,...V_N]$. $V_i$ (:,m) denotes the $m^{th}$ column vector of $V_i$. Each precoding value vector of $V_1$, $V_2$, ..., and $V_N$ indicates a precoding value vector assigned by the base station to one user terminal. Dynamic value changes of i are used to indicate all the N user terminals, i is a positive integer greater than 0 and less than or equal to N, and a value of i is any positive integer of 1, 2, 3, ..., or N. A precoding value vector assigned by the base station to the $i^{th}$ user terminal is $V_i$, where $V_i$ is a $K \times l_i$ matrix. $V_i$ is a total of $l_i$ precoding value vectors assigned by the base station to the $i^{th}$ user terminal of the N user terminals. Multiplying sum($[V_1$ (:,m),$V_2$ (:,m),... $V_N$ (:,m)]) by $c_m$ is equal to multiplying all the precoding value vectors by the common signal, thereby implementing weighting of the common signal by using the precoding matrix, to obtain a to-be-transmitted common signal that is mapped onto the K physical transmit antennas. In addition, by multiplying the precoding matrix by the common signal, the common signal is mapped onto the K physical transmit antennas.

For example, the first code block $c_1$ that needs to be mapped onto a port 0 is mapped in the following manner:

$$[V_1 (:,1),V_2 (:,1),...V_N (:,1)] \times c_1$$
$$= V_1 (:,1) \times c_1 + V_2 (:,1) \times c_1 + ... + V_N (:,1) \times c_1;$$

the second code block $c_2$ that needs to be mapped onto a port 1 is mapped in the following manner:

$$[V_1 (:,2),V_2 (:,2),...V_N (:,2)] \times c_2$$
$$= V_1 (:,2) \times c_2 + V_2 (:,2) \times c_2 + ... + V_N (:,2) \times c_2;$$

...

the $m^{th}$ code block that needs to be mapped onto the $(m-1)^{th}$ port is mapped in the following manner:

$$[V_1 (:,m),V_2 (:,m),...V_N (:,m)] \times c_m$$
$$= V_1 (:,m) \times c_m + V_2 (:,m) \times c_m + ... + V_N (:,m) \times c_m.$$

It should be noted that, in the foregoing embodiment of the present invention, step S16 may also be replaced with the following step:

Step S16a: The base station separately maps, to the t antenna ports, the code blocks that are corresponding to all the user terminals, where the $m^{th}$ code block is mapped onto the $(m-1)^{th}$ antenna port in the following manner:

$$P_m' = sum([U_1 (:,m),U_2 (:,m),...U_N (:,m)]) \times c_m;$$

or

$$P_m' = sum([V_1 (:,m),V_2 (:,m),...V_N (:,m)]) \times c_m;$$

further,

$$sum([U_1 (:,m),U_2 (:,m),...U_N (:,m)]) \times c_m$$
$$= U_1 (:,m) \times c_m + U_2 (:,m) \times c_m + ... + U_N (:,m) \times c_m;$$

or

$$sum([V_1 (:,m),V_2 (:,m),...V_N (:,m)]) \times c_m$$
$$= V_1 (:,m) \times c_m + V_2 (:,m) \times c_m + ... + V_N (:,m) \times c_m;$$

where

$P_m'$ is a second to-be-transmitted common signal that is mapped onto the $(m-1)^{th}$ antenna port, $P_m'$ is obtained by using a precoding matrix and a mapping matrix in a time-division manner, $[U_1, U_2, ... U_N]$ is a $K \times M$ mapping matrix, $U_i$ is a $K \times I_i$ matrix, $U_i$ is a total of $I_i$ precoding value vectors assigned by the base station to the $i^{th}$ user terminal of the N user terminals, i is a positive integer greater than 0 and less than or equal to N, and when $m \leq I_i$, $U_i (:,m)$ denotes the $m^{th}$ column vector of $U_i$, and when $m > I_i$, $U_i (:,m)$ is a $K \times 1$ vector with all 0s, where m is a positive integer greater than or equal to 1 and less than or equal to t, $sum([U_1 (:,m), U_2 (:,m), ... U_N (:,m)])$ is a result obtained by performing a summation operation on column vectors in all columns of $[U_1 (:,m), U_2 (:,m), ... U_N (:,m)]$, and $c_m$ is a common signal corresponding to the $(m-1)^{th}$ port.

The mapping matrix remains unchanged when channel characteristics or scheduled user terminals change. A difference between step S16a and step S16 is that, in step S16a, the common signal is weighted by using a precoding matrix and a mapping matrix in a time-division manner. In some embodiments of the present invention, in step S16a, the common signal is weighted by using a precoding matrix and a mapping matrix in a time-division manner, and in this implementation scenario, a generated to-be-transmitted common signal is defined as a second to-be-transmitted common signal.

**Embodiment 6**

The following uses an example to describe manners of transmitting a data stream, a pilot signal, scheduling information, and a common signal when one antenna port is configured for a base station. As shown in FIG. 7-a, FIG. 7-a is a schematic diagram of an application scenario of transmitting a data stream, a pilot signal, scheduling information, and a common signal by a base station. Each user terminal (UE for short in English) uses a single data stream for transmission. N users that require multiplexing have a total of N layers (full name in English: layer) to be transmitted. Each user has only one layer of data. For example, N is 2, a precoding matrix is a matrix 1, and the matrix 1 has a total of two columns, which are a column 1 and a column 2, respectively. For UE 1, the base station separately weights a data stream of UE 1, scheduling information of UE 1, and a pilot signal by using the column 1 of the matrix 1; and after completing resource block mapping, the base station obtains a to-be-transmitted data stream of UE 1, to-be-transmitted scheduling information of UE 1, and a to-be-transmitted pilot signal that are mapped onto K physical transmit antennas (which are denoted by ao, ..., and $a_{(k-1)}$ in the figure). For UE 2, the base station separately weights a data stream of UE 2, scheduling information of UE 2, and a pilot signal by using the column 2 of the matrix 1; and after completing resource block mapping, the base station obtains a to-be-transmitted data stream of UE 2, to-be-transmitted scheduling information of UE 2, and a to-be-transmitted pilot signal that are mapped onto the K physical transmit antennas (which are denoted by ao, ..., and $a_{(k-1)}$ in the figure). The following uses an example to describe how the base station weights a common signal. First, when one antenna port is configured for a base station, as shown in FIG. 7-a, each user terminal (UE for short in English) uses a single data stream for transmission. Each user has only one layer of data. A precoding matrix is a matrix 1, and the matrix 1 has a total of two columns. The base station weights a common signal by using a column 1 and a column 2 of the matrix 1; and after completing resource block mapping, the base station obtains a to-be-transmitted common signal that is mapped onto K physical transmit antennas (which are denoted by $a_0$, ..., and $a_{(k-1)}$ in the figure). The to-be-transmitted data stream of UE 1, the to-be-transmitted scheduling information of UE 1, the to-be-transmitted pilot signal, and the to-be-transmitted common signal that are generated by the base station are indicated by an orthogonal frequency division multiplexing (full name in English: Orthogonal frequency-division multiplexing, OFDM for short in English) signal 1. The to-be-transmitted data stream of UE 2, the to-be-transmitted scheduling information of UE 2, the to-be-transmitted pilot signal, and the to-be-transmitted common signal that are generated by the base station are indicated by an OFDM signal 2. The base station sends the OFDM signal 1 and the OFDM signal 2 by using a remote radio unit (full name in English: Remote Radio Unit, RRU for short in English).

The following uses an example to describe manners of transmitting a data stream, a pilot signal, scheduling information, and a common signal when t antenna ports are configured for a base station. As shown in FIG. 7-b, FIG. 7-b is a schematic diagram of another application scenario of transmitting a data stream, a pilot signal, scheduling information, and a common signal by a base station. The following provides description by using an example in which a quantity t of antenna ports configured for the base station is 2, and a specific quantity N of user terminals that require spatial multiplexing is 2. UE 1 uses two data streams for transmission, and UE 2 uses a single data stream for transmission. For UE 1, the base station weights an L1 data stream of UE 1 (that is, a layer 1 data stream of UE 1) by using $V1(:,1)$ of a matrix 1; and after completing resource block mapping, the base station obtains an L1 to-be-transmitted data stream of UE 1 that is mapped onto K physical transmit antennas (which are denoted by $a_0$, ..., and $a_{(k-1)}$ in the figure). The base station performs space frequency block coding (full name in English: Space Frequency Block Coding, SFBC for short in English) on scheduling information of UE 1 (that is, scheduling information of UE 1), to obtain $g_1 (1)$ and $g_1 (2)$, and then weights $g_1 (1)$ by using $V1(:,1)$ of the matrix 1 and weights $g_1 (2)$ by using $V1(:,2)$ of the matrix 1; and after completing resource block mapping, the base station obtains a to-be-transmitted scheduling information of UE 1 that is mapped onto the K physical transmit antennas (which are denoted by $a_0$, ..., and $a_{(k-1)}$ in the figure). The base station weights a pilot signal $p_0$ by using V1(:,1) of the matrix 1 and weights a pilot signal $p_1$ by using V1(:,2) of the matrix 1; and after completing resource block mapping, the base station obtains a to-be-transmitted pilot signal of UE 1 that is mapped onto the K physical transmit antennas (which are denoted by $a_0$, ..., and $a_{(k-1)}$ in the figure). The base station weights an L2 data stream of UE 1 (that is, a layer 2 data stream of UE 1) by using V1(:,2) of the matrix 1; and after completing resource block mapping, the base station obtains an L2 to-be-transmitted data stream of UE 1 that is mapped onto K physical transmit antennas (which are denoted by $a_0$, ..., and $a_{(k-1)}$ in the figure). For UE 2, the base station weights an L1 data stream of UE 2 (UE 2 has only one layer of data stream) by using V2(:,1) of a matrix 1; and after completing resource block mapping, the base station obtains an L1 to-be-transmitted data stream of UE 2 that is mapped onto K physical transmit antennas (which are denoted by $a_0$, ..., and $a_{(k-1)}$ in the figure). The base station performs SFBC on scheduling information of UE 2 (that is, scheduling information of UE 2), to obtain $g_2$ (1) and $g_2$ (2). Because UE 2 has only one layer of data stream, to ensure consistency between a data stream, a pilot signal, and scheduling information of UE 2, $g_2$ (2) is discarded. There are multiple equivalent implementation operations of discarding $g_2$ (2): for example, setting $g_2$ (2) to 0, or multiplying $g_2$ (2) by a zero vector, or discarding $g_2$ (2) and never using $g_2$ (2) again. The base station weights only $g_2$ (1) by using V2(:,1) of the matrix 1; and after completing resource block mapping, the base station obtains to-be-transmitted scheduling information of UE 2 that is mapped onto K physical transmit antennas (which are denoted by $a_0$, ..., and $a_{(k-1)}$ in the figure). The base station weights a pilot signal po by using V2(:,1) of the matrix 1; and after completing resource block mapping, the base station obtains a to-be-transmitted pilot signal that are mapped onto K physical transmit antennas (which are denoted by $a_0$, ..., and $a_{(k-1)}$ in the figure). The base station performs space frequency block coding on a common signal to obtain c(1) and c(2), and the base station respectively weights c(1) and c(2) by using V1(:,1) + V2(:,1) of the matrix 1 and V1(:,2) + V2(:,2) of the matrix 1; and after completing resource block mapping, the base station obtains a to-be-transmitted common signal that is mapped onto K physical transmit antennas (which are denoted by $a_0$, ..., and $a_{(k-1)}$ in the figure). The generated to-be-transmitted data stream of UE 1, to-be-transmitted pilot signal of UE 1, to-be-transmitted scheduling information of UE 1, and to-be-transmitted common signal of UE 1 are indicated by an OFDM signal 3. The to-be-transmitted data stream of UE 2, the to-be-transmitted scheduling information of UE 2, the to-be-transmitted pilot signal of UE 2, and the to-be-transmitted common signal of UE 2 are indicated by an OFDM signal 4. The base station sends the OFDM signal 3 and the OFDM signal 4 by using an RRU.

It can be learned from the description of the present invention in the foregoing embodiment that a base station weights, by using a precoding matrix, multiple data streams that need to be transmitted to N user terminals, to obtain to-be-transmitted data streams that are mapped onto K physical transmit antennas; the base station weights, by using the precoding matrix, a pilot signal that needs to be transmitted to the N user terminals, to obtain to-be-transmitted pilot signals that are mapped onto the K physical transmit antennas; the base station weights, by using the precoding matrix, scheduling information that needs to be transmitted to the N user terminals, to obtain to-be-transmitted scheduling information that is mapped onto the K physical transmit antennas; the base station weights, by using the precoding matrix, a common signal that needs to be transmitted to the N user terminals, to obtain a to-be-transmitted common signal that is mapped onto the K physical transmit antennas; and finally, the base station sends the to-be-transmitted data streams, the to-be-transmitted pilot signals, the to-be-transmitted scheduling information, and the to-be-transmitted common signal to the N user terminals by using the K physical transmit antennas, where the to-be-transmitted data stream, the to-be-transmitted pilot signal, the to-be-transmitted scheduling information, and the to-be-transmitted common signal are mapped onto different time-frequency resources, and the precoding matrix is obtained by means of calculation according to characteristics of channels from the K physical transmit antennas to the N user terminals. The base station separately weights, by using the precoding matrix, the data streams, the pilot signal, the scheduling information, and the common signal that need to be transmitted to the N user terminals, thereby implementing spatial multiplexing between the N user terminals. The multiple data streams may be multiplexed to the N user terminals by means of weighting with the precoding matrix. In addition, spatial multiplexing is implemented for the pilot signal by means of weighting with the precoding matrix, and the to-be-transmitted pilot signal obtained by means of weighting no longer depends on a CRS for differentiating space-division user terminal layer numbers. Therefore, spatial multiplexing can be performed for more user terminals, and utilization of time-frequency resources can be improved.

**Embodiment 7**

The foregoing embodiments describe the multi-user multiplexing method provided in this embodiment of the present invention from the perspective of a base station. The following describes the multi-user multiplexing method provided in this embodiment of the present invention from the perspective of a user terminal. As shown in FIG. 8, the following steps may be specifically included.

801. A user terminal receives transmitted data streams and transmitted pilot signals that are sent by a base station by using K physical transmit antennas.

The transmitted data streams are obtained after the base station weights, by using a precoding matrix, multiple data streams that need to be transmitted to N user terminals, and the transmitted data streams are mapped onto the K physical transmit antennas; the transmitted pilot signals are obtained after the base station weights, by using the precoding matrix, a pilot signal that needs to be transmitted to the N user terminals, where the transmitted pilot signals are mapped onto the K physical transmit antennas, the transmitted data stream and the transmitted pilot signal are mapped onto different time-frequency resources, and the precoding matrix is obtained by means of calculation according to characteristics of channels from the K physical transmit antennas to the N user terminals.

For how the base station weights, by using a precoding matrix, the pilot signal and the multiple data streams that need to be transmitted to the N user terminals, refer to the description in the foregoing embodiments, and details are not described herein.

802. The user terminal performs, according to the transmitted pilot signals, channel estimation on a channel corresponding to an antenna port.

803. The user terminal demodulates the transmitted data streams according to a result of the channel estimation.

In this embodiment of the present invention, notes are made for a multi-user multiplexing method executed for one user terminal of the N user terminals that require spatial multiplexing. The user terminal first receives, by using the K physical transmit antennas, the transmitted data streams and the transmitted pilot signals that are sent by the base station. The transmitted data streams from the perspective of the user terminal are the to-be-transmitted data streams from the perspective of the base station in the foregoing embodiment. Likewise, the transmitted pilot signals from the perspective of the user terminal are the to-be-transmitted pilot signals from the perspective of the base station in the foregoing embodiment. Likewise, the transmitted scheduling information from the perspective of the user terminal is the to-be-transmitted scheduling information from the perspective of the base station in the foregoing embodiment. Likewise, a first transmitted common signal and a second transmitted common signal from the perspective of the user terminal are the first to-be-transmitted common signal and the second to-be-transmitted common signal from the perspective of the base station in the foregoing embodiment.

In step 802, after receiving the transmitted pilot signals by using the K physical transmit antennas, the user terminal performs, by using the transmitted pilot signals, channel estimation on the channel corresponding to the antenna port, to obtain the result of the channel estimation. The result of the channel estimation may be used for demodulating the transmitted data streams to restore data streams sent by the base station to the user terminal. All the N user terminals that require spatial multiplexing may implement the method described in the foregoing embodiment; however, all user terminals may receive their respective data streams sent by the base station, and no mutual interference is generated between the user terminals.

In some embodiments of the present invention, in addition to the method described above, the multi-user multiplexing method provided in this embodiment of the present invention further includes the following step:
the user terminal receives transmitted scheduling information that is sent by the base station by using the K physical transmit antennas, where the transmitted scheduling information is obtained after the base station weights, by using the precoding matrix, scheduling information that needs to be transmitted to the N user terminals, the transmitted scheduling information is mapped onto the K physical transmit antennas, and the transmitted data stream, the transmitted pilot signal, and the transmitted scheduling information are mapped onto different time-frequency resources.

The transmitted scheduling information is sent to the user terminal by the base station by using the K physical transmit antennas. The user terminal receives, by using the K physical transmit antennas, the transmitted scheduling information. The user terminal may obtain, by using transmitted scheduling information, a scheduling instruction sent by the base station.

In some embodiments of the present invention, in addition to the method described above, the multi-user multiplexing method provided in this embodiment of the present invention further includes the following step:
the user terminal receives a first transmitted common signal that is sent by the base station by using the K physical transmit antennas, where the first transmitted common signal is obtained after the base station weights, by using the precoding matrix, a common signal that needs to be transmitted to the N user terminals, where the first transmitted common signal is mapped onto the K physical transmit antennas, and the transmitted data stream, the transmitted pilot signal, and the first transmitted common signal are mapped onto different time-frequency resources.

All the N user terminals that require spatial multiplexing can receive the first transmitted common signal by using the K physical transmit antennas. For detailed description of the common signal, refer to description in the foregoing embodiments.

In some embodiments of the present invention, in addition to the method described above, the multi-user multiplexing method provided in this embodiment of the present invention further includes the following step:
the user terminal receives a second transmitted common signal that is sent by the base station by using the K physical transmit antennas, where the second transmitted common signal is obtained after the base station weights, by using the precoding matrix or a mapping matrix in a time-division manner, a common signal that needs to be transmitted to the N user terminals, the second transmitted common signal is mapped onto the K physical transmit antennas, the mapping matrix remains unchanged when the channel characteristics or scheduled user terminals change, and the transmitted data stream, the transmitted pilot signal, and the second transmitted common signal are mapped onto different time-frequency resources.

It can be learned from the description of the present invention in the foregoing embodiment that a base station sends to-be-transmitted data streams, to-be-transmitted pilot signals, and to-be-transmitted scheduling information to N user terminals by using K physical transmit antennas. All the user terminals receive the transmitted data streams and the transmitted pilot signals by using the K physical transmit antennas. No mutual interference is generated between the user terminals, and spatial multiplexing is implemented between the N user terminals. Multiple data streams may be multiplexed to the N user terminals by means of weighting with a precoding matrix. In addition, spatial multiplexing is implemented for a pilot signal by means of weighting with the precoding matrix, and the to-be-transmitted pilot signal obtained by means of weighting no longer depends on a CRS for differentiating space-division user terminal layer numbers. Therefore, spatial multiplexing can be performed for more user terminals, and utilization of time-frequency resources can be improved.

It should be noted that, to make the description brief, the foregoing method embodiments are expressed as a series of actions. However, a person skilled in the art should appreciate that the present invention is not limited to a sequence of the described actions, because according to the present invention, some steps may be performed in other sequences or performed simultaneously. In addition, a person skilled in the art should also appreciate that all the embodiments described in the specification are preferred embodiments, and the related actions and modules are not necessarily mandatory to the present invention.

To better implement the foregoing solution of the embodiments of the present invention, the following further provides an apparatus related to the foregoing solution.

As shown in FIG. 9-a, a base station 900 provided in this embodiment of the present invention may include: a processing module 901 and a transmission module 902.

The processing module 901 is configured to weight, by using a precoding matrix, multiple data streams that need to be transmitted to N user terminals, to obtain to-be-transmitted data streams that are mapped onto K physical transmit antennas.

The processing module 901 is further configured to weight, by using the precoding matrix, a pilot signal that needs to be transmitted to the N user terminals, to obtain to-be-transmitted pilot signals that are mapped onto the K physical transmit antennas.

The transmission module 902 is configured to send the to-be-transmitted data streams and the to-be-transmitted pilot signals to the N user terminals by using the K physical transmit antennas, where the to-be-transmitted data stream and the to-be-transmitted pilot signal are mapped onto different time-frequency resources.

N and K are natural numbers. The precoding matrix is obtained by means of calculation according to characteristics of channels from the K physical transmit antennas to the N user terminals.

In some embodiments of the present invention, if one antenna port is configured for the base station, the processing module 901 is specifically configured to weight N data streams in the following manner:

$$[X_1, X_2, ... X_K] = [V_1, V_2, ... V_N] \times [s_1; s_2; ...; s_N];$$

where

$[X_1, X_2, ... X_K]$ is the to-be-transmitted data streams, $[V_1, V_2, ... V_N]$ is a $K \times N$ precoding matrix, any column of $[V_1, V_2, ... V_N]$ is denoted by $V_i$, i is a positive integer greater than 0 and less than or equal to N, $V_i$ is a total of $l_i$ precoding value vectors assigned by the base station to the $i^{th}$ user terminal of the N user terminals, $V_i$ is a $K \times 1$ column vector, $[s_1; s_2; ...; s_N]$ is the N data streams denoted by an $N \times 1$ column vector, any column of $[s_1; s_2; ...; s_N]$ is denoted by $s_i$, and $s_i$ is a data stream that needs to be transmitted by the base station to the $i^{th}$ user terminal of the N user terminals.

In some embodiments of the present invention, if one antenna port is configured for the base station, the processing module 901 is specifically configured to weight the pilot signal in the following manner:

$$Y_0 = sum([V_1, V_2, ... V_N]) \times p_0;$$

where

$Y_0$ is the to-be-transmitted pilot signals, $[V_1, V_2, ... V_N]$ is a $K \times N$ precoding matrix, any column of $[V_1, V_2, ... V_N]$ is denoted by $V_i$, i is a positive integer greater than 0 and less than or equal to N, $sum([V_1, V_2, ... V_N])$ is a result obtained by performing a summation operation on column vectors in all columns of $[V_1, V_2, ... V_N]$, $V_i$ is a total of $l_i$ precoding value vectors assigned by the base station to the $i^{th}$ user terminal of the N user terminals, $V_i$ is a $K \times 1$ column vector, and $p_0$ is the pilot signal.

In some embodiments of the present invention, if t antenna ports are configured for the base station, where t is a positive integer greater than 1, the processing module 901 is specifically configured to weight M data streams in the following manner:

$$[X_1, X_2, ... X_K] = [V_1, V_2, ... V_N] \times [s_1; s_2; ...; s_N];$$

where

$[X_1, X_2, ... X_K]$ is the to-be-transmitted data streams, $[V_1, V_2, ... V_N]$ is a K×M precoding matrix, any column of $[V_1, V_2, ... V_N]$ is denoted by $V_i$, i is a positive integer greater than 0 and less than or equal to N, $V_i$ is a K×$I_i$ matrix, $V_i$ is a total of $I_i$ precoding value vectors assigned by the base station to the i$^{th}$ user terminal of the N user terminals, $I_i$ is a positive integer greater than or equal to 1, $[s_1; s_2; ...; s_N]$ is the M data streams denoted by an M×1 column vector, any column of $[s_1; s_2; ...; s_N]$ is denoted by $s_i$, $s_i$ is an $I_i$×1 column vector, $s_i$ is a total of $I_i$ layers of data streams that need to be transmitted by the base station to the i$^{th}$ user terminal of the N user terminals, and M is greater than or equal to N.

In some embodiments of the present invention, if t antenna ports are configured for the base station, where t is a positive integer greater than 1, the processing module 901 is specifically configured to separately map the pilot signal to the t antenna ports, where a pilot signal on the (m-1)$^{th}$ antenna port is mapped onto the K physical transmit antennas in the following manner:

$$Y_{(m-1)} = sum([V_1 (:,m), V_2 (:,m), ... V_N (:,m)]) \times p_{(m-1)};$$

where

$Y_{(m-1)}$ is a to-be-transmitted pilot signal that is mapped onto the (m-1)$^{th}$ antenna port, $[V_1, V_2, ... V_N]$ is a K×M precoding matrix, any column of $[V_1, V_2, ... V_N]$ is denoted by $V_i$, i is a positive integer greater than 0 and less than or equal to N, $V_i$ is a K×$I_i$ matrix, $V_i$ is a total of $I_i$ precoding value vectors assigned by the base station to the i$^{th}$ user terminal of the N user terminals, i is a positive integer greater than 0 and less than or equal to N, and when m ≤ $I_i$, $V_i$ (:,m) denotes the m$^{th}$ column vector of $V_i$, and when m > $I_i$, $V_i$ (:,m) is a K×1 vector with all 0s, where m is a positive integer greater than or equal to 1 and less than or equal to t, sum($[V_1 (:,m), V_2 (:,m), ... V_N (:,m)]$) is a result obtained by performing a summation operation on column vectors in all columns of $[V_1 (:,m), V_2 (:,m), ... V_N (:,m)]$, and $p_{(m-1)}$ is a pilot signal corresponding to the (m-1)$^{th}$ port.

In some embodiments of the present invention, the processing module 901 is further configured to: before the transmission module sends the to-be-transmitted data streams and the to-be-transmitted pilot signals to the N user terminals by using the K physical transmit antennas, weight, by using the precoding matrix, scheduling information that needs to be transmitted to the N user terminals, to obtain to-be-transmitted scheduling information that is mapped onto the K physical transmit antennas, where the to-be-transmitted data stream, the to-be-transmitted pilot signal, and the to-be-transmitted scheduling information are mapped onto different time-frequency resources.

In some embodiments of the present invention, if one antenna port is configured for the base station, the processing module 901 is specifically configured to weight N pieces of scheduling information in the following manner:

$$[Z_1, Z_2, ... Z_K] = [V_1, V_2, ... V_N] \times [g_1; g_2; ...; g_N];$$

where

$[Z_1, Z_2, ... Z_K]$ is the to-be-transmitted scheduling information, $[V_1, V_2, ... V_N]$ is a K×N precoding matrix, any column of $[V_1, V_2, ... V_N]$ is denoted by $V_i$, i is a positive integer greater than 0 and less than or equal to N, $V_i$ is a total of $I_i$ precoding value vectors assigned by the base station to the i$^{th}$ user terminal of the N user terminals, $V_i$ is a K×1 column vector, $[g_1; g_2; ...; g_N]$ is the N pieces of scheduling information denoted by an N×1 column vector, any column of $[g_1; g_2; ...; g_N]$ is denoted by $g_i$, and $g_i$ is scheduling information that needs to be transmitted by the base station to the i$^{th}$ user terminal of the N user terminals.

Specifically, if t antenna ports are configured for the base station, where t is a positive integer greater than 1, the processing module 901 is configured to perform space frequency block coding on the scheduling information that needs to be transmitted to the N user terminals, to obtain N code blocks that are respectively corresponding to the N user terminals, where a code block corresponding to the ith user terminal is [gi (1),..., gi (m) ..., gi (t)], i is a positive integer greater than 0 and less than or equal to N, m is a positive integer greater than 0 and less than or equal to t, and gi (m) denotes an information symbol that needs to be mapped onto the (m-1)$^{th}$ antenna port after the space frequency block coding.

The processing module 901 is configured to separately map, to the t antenna ports, the code blocks that are corresponding to all the user terminals, where the mth code block of the N user terminals is mapped onto the $(m-1)^{th}$ antenna port in the following manner:

$$[Z_{i,1}, Z_{i,2}, ... Z_{i,K}] = [V_1(:,m), V_2(:,m), ... V_N(:,m)] \times [g_1(m), ..., g_N(m)];$$

where
$[Z_{i,1}, Z_{i,2}, ... Z_{i,K}]$ is to-be-transmitted scheduling information assigned by the base station to the $i^{th}$ user of the N user terminals, $[V_1, V_2, ... V_N]$ is a $K \times M$ precoding matrix, any column of $[V_1, V_2, ... V_N]$ is denoted by $V_i$, i is a positive integer greater than 0 and less than or equal to N, $V_i$ is a $K \times I_i$ matrix, $V_i$ is a total of $I_i$ precoding value vectors assigned by the base station to the $i^{th}$ user terminal of the N user terminals, and m is a positive integer greater than 0 and less than or equal to t, and when $m \leq I_i$, $V_i(:,m)$ denotes the $m^{th}$ column vector of $V_i$, and when $m > I_i$, $V_i(:,m)$ is a $K \times 1$ vector with all 0s.

In some embodiments of the present invention, the processing module 901 is further configured to: before the transmission module sends the to-be-transmitted data streams and the to-be-transmitted pilot signals to the N user terminals by using the K physical transmit antennas, weight a common signal by using the precoding matrix, to obtain a first to-be-transmitted common signal that is mapped onto the K physical transmit antennas, where the to-be-transmitted data stream, the to-be-transmitted pilot signal, and the first to-be-transmitted common signal are mapped onto different time-frequency resources.

In some embodiments of the present invention, the processing module 901 is configured to: before the transmission module sends the to-be-transmitted data streams and the to-be-transmitted pilot signals to the N user terminals by using the K physical transmit antennas, weight a common signal by using the precoding matrix or a mapping matrix in a time-division manner, to obtain a second to-be-transmitted common signal that is mapped onto the K physical transmit antennas, where the mapping matrix remains unchanged when the channel characteristics or scheduled user terminals change, and the to-be-transmitted data stream, the to-be-transmitted pilot signal, and the second to-be-transmitted common signal are mapped onto different time-frequency resources.

In some embodiments of the present invention, the precoding matrix and the mapping matrix that are used for weighting the common signal are used in a time-division manner.

In some embodiments of the present invention, K is greater than N.

In some embodiments of the present invention, if one antenna port is configured for the base station, the processing module 901 is specifically configured to weight the common signal in the following manner:

$$P = sum([V_1, V_2, ... V_N]) \times c;$$

where
P is the first to-be-transmitted common signal, $[V_1, V_2, ... V_N]$ is a $K \times N$ precoding matrix, any column of $[V_1, V_2, ... V_N]$ is denoted by $V_i$, i is a positive integer greater than 0 and less than or equal to N, $V_i$ is a total of $I_i$ precoding value vectors assigned by the base station to the $i^{th}$ user terminal of the N user terminals, $V_i$ is a $K \times 1$ column vector, $sum([V_1, V_2, ... V_N])$ is a result obtained by performing a summation operation on column vectors in all columns of $[V_1, V_2, ... V_N]$, and c is the common signal.

In some embodiments of the present invention, if t antenna ports are configured for the base station, where t is a positive integer greater than 1, the processing module 901 is configured to perform space frequency block coding on the common signal to obtain t coded information symbols that are corresponding to the t antenna ports, where a coded information symbol that is corresponding to the $(m-1)^{th}$ antenna port is denoted by $c_m$, and m is a positive integer greater than 0 and less than or equal to t.

The processing module 901 is configured to separately map, to the t antenna ports, the code blocks that are corresponding to all the user terminals, where the $m^{th}$ code block is mapped onto the $(m-1)^{th}$ antenna port in the following manner:

$$P_m = sum([V_1(:,m), V_2(:,m), ... V_N(:,m)]) \times c_m;$$

where
$P_m$ is the first to-be-transmitted common signal that is mapped onto the $(m-1)^{th}$ antenna port, $[V_1, V_2, ... V_N]$ is a $K \times M$ precoding matrix, any column of $[V_1, V_2, ... V_N]$ is denoted by $V_i$, i is a positive integer greater than 0 and less than or equal to N, $V_i$ is a $K \times I_i$ matrix, $V_i$ is a total of $I_i$ precoding value vectors assigned by the base station to the $i^{th}$ user terminal of the N user terminals, and when $m \leq I_i$, $V_i(:,m)$ denotes the $m^{th}$ column vector of $V_i$, and when $m > I_i$, $V_i(:,m)$ is a $K \times 1$

vector with all 0s, where m is a positive integer greater than or equal to 1 and less than or equal to t, sum($[V_1$ $(:,m),V_2$ $(:,m),...$ $V_N$ $(:,m)]$) is a result obtained by performing a summation operation on column vectors in all columns of $[V_1$ $(:,m),V_2$ $(:,m),...$ $V_N$ $(:,m)]$, and $c_m$ is a common signal corresponding to the $(m-1)^{th}$ port.

In some embodiments of the present invention, when the common signal is a primary synchronization signal or a secondary synchronization signal, the mapping matrix is a K×1 column vector with all Is.

In some embodiments of the present invention, as shown in FIG. 9-b, in comparison with FIG. 9-a, the base station 900 further includes a calculation module 903, configured to: when the channel characteristics or the scheduled user terminals change, recalculate weight values of the precoding matrix used to weight the data streams and the pilot signal.

It can be learned from the description of the present invention in the foregoing embodiment that a base station weights, by using a precoding matrix, multiple data streams that need to be transmitted to N user terminals, to obtain to-be-transmitted data streams that are mapped onto K physical transmit antennas; the base station weights, by using the precoding matrix, a pilot signal that needs to be transmitted to the N user terminals, to obtain to-be-transmitted pilot signals that are mapped onto the K physical transmit antennas; and finally, the base station sends the to-be-transmitted data streams and the to-be-transmitted pilot signals to the N user terminals by using the K physical transmit antennas, where the to-be-transmitted data stream and the to-be-transmitted pilot signal are mapped onto different time-frequency resources, and the precoding matrix is obtained by means of calculation according to characteristics of channels from the K physical transmit antennas to the N user terminals. The base station separately weights, by using the precoding matrix, both the data streams and the pilot signal that need to be transmitted to the N user terminals, and after completing weighting, transmits the to-be-transmitted data streams and the to-be-transmitted pilot signals by using the K physical transmit antennas of the base station, thereby implementing spatial multiplexing between the N user terminals. The multiple data streams may be multiplexed to the N user terminals by means of weighting with the precoding matrix. In addition, spatial multiplexing is implemented for the pilot signal by means of weighting with the precoding matrix, and the to-be-transmitted pilot signal obtained by means of weighting no longer depends on a CRS for differentiating space-division user terminal layer numbers. Therefore, spatial multiplexing can be performed for more user terminals, and utilization of time-frequency resources can be improved.

As shown in FIG. 10, a user terminal 1000 provided in this embodiment of the present invention may include a receiving module 1001 and a processing module 1002.

The receiving module 1001 is configured to receive transmitted data streams and transmitted pilot signals that are sent by a base station by using K physical transmit antennas, where the transmitted data streams are obtained after the base station weights, by using a precoding matrix, multiple data streams that need to be transmitted to N user terminals, and the transmitted data streams are mapped onto the K physical transmit antennas; the transmitted pilot signals are obtained after the base station weights, by using the precoding matrix, a pilot signal that needs to be transmitted to the N user terminals, where the transmitted pilot signals are mapped onto the K physical transmit antennas, the transmitted data stream and the transmitted pilot signal are mapped onto different time-frequency resources, and the precoding matrix is obtained by means of calculation according to characteristics of channels from the K physical transmit antennas to the N user terminals.

The processing module 1002 is configured to perform, according to the transmitted pilot signals, channel estimation on a channel corresponding to an antenna port, and is configured to demodulate the transmitted data streams according to a result of the channel estimation.

In some embodiments of the present invention, the receiving module 1001 is further configured to receive transmitted scheduling information that is sent by the base station by using the K physical transmit antennas, where the transmitted scheduling information is obtained after the base station weights, by using the precoding matrix, scheduling information that needs to be transmitted to the N user terminals, the transmitted scheduling information is mapped onto the K physical transmit antennas, and the transmitted data stream, the transmitted pilot signal, and the transmitted scheduling information are mapped onto different time-frequency resources.

In some embodiments of the present invention, the receiving module 1001 is further configured to receive a first transmitted common signal that is sent by the base station by using the K physical transmit antennas, where the first transmitted common signal is obtained after the base station weights, by using the precoding matrix, a common signal that needs to be transmitted to the N user terminals, where the first transmitted common signal is mapped onto the K physical transmit antennas, and the transmitted data stream, the transmitted pilot signal, and the first transmitted common signal are mapped onto different time-frequency resources.

In some embodiments of the present invention, the receiving module 1001 is further configured to receive a second transmitted common signal that is sent by the base station by using the K physical transmit antennas, where the second transmitted common signal is obtained after the base station weights, by using the precoding matrix or a mapping matrix in a time-division manner, a common signal that needs to be transmitted to the N user terminals, the second transmitted common signal is mapped onto the K physical transmit antennas, the mapping matrix remains unchanged when the channel characteristics or scheduled user terminals change, and the transmitted data stream, the transmitted pilot signal, and the second transmitted common signal are mapped onto different time-frequency resources.

It can be learned from the description of the present invention in the foregoing embodiment that a base station sends to-be-transmitted data streams, to-be-transmitted pilot signals, and to-be-transmitted scheduling information to N user terminals by using K physical transmit antennas. All the user terminals receive the transmitted data streams and the transmitted pilot signals by using the K physical transmit antennas. No mutual interference is generated between the user terminals, and spatial multiplexing is implemented between the N user terminals. Multiple data streams may be multiplexed to the N user terminals by means of weighting with a precoding matrix. In addition, spatial multiplexing is implemented for a pilot signal by means of weighting with the precoding matrix, and the to-be-transmitted pilot signal obtained by means of weighting no longer depends on a CRS for differentiating space-division user terminal layer numbers. Therefore, spatial multiplexing can be performed for more user terminals, and utilization of time-frequency resources can be improved.

This embodiment of the present invention further provides a computer storage medium. A program is stored in the computer storage medium, and the program executes some or all steps recorded in the foregoing method embodiments.

The following describes another base station provided in this embodiment of the present invention. As shown in FIG. 11, a base station 1100 includes:

a processor 1101, a memory 1102, and a physical transmit antenna 1103 (the base station 1100 may include one or more processors 1101, and in an example in FIG. 11, the base station 1100 includes one processor.). In some embodiments of the present invention, the processor 1101, the memory 1102, and the transmit antenna 1103 may be connected by using a bus or in another manner. For example, in FIG. 11, a bus is used for a connection, and a quantity of physical transmit antennas 1103 is K.

The memory 1102 is configured to store data required by the processor during an execution process, a program instruction, and generated data.

The processor 1101 is configured to execute the multi-user multiplexing method provided in the foregoing method embodiment from the perspective of a base station.

It can be learned from the description of the present invention in the foregoing embodiment that a base station weights, by using a precoding matrix, multiple data streams that need to be transmitted to N user terminals, to obtain to-be-transmitted data streams that are mapped onto K physical transmit antennas; the base station weights, by using the precoding matrix, a pilot signal that needs to be transmitted to the N user terminals, to obtain to-be-transmitted pilot signals that are mapped onto the K physical transmit antennas; and finally, the base station sends the to-be-transmitted data streams and the to-be-transmitted pilot signals to the N user terminals by using the K physical transmit antennas, where the to-be-transmitted data stream and the to-be-transmitted pilot signal are mapped onto different time-frequency resources, and the precoding matrix is obtained by means of calculation according to characteristics of channels from the K physical transmit antennas to the N user terminals. The base station separately weights, by using the precoding matrix, both the data streams and the pilot signal that need to be transmitted to the N user terminals, and after completing weighting, transmits the to-be-transmitted data streams and the to-be-transmitted pilot signals by using the K physical transmit antennas of the base station, thereby implementing spatial multiplexing between the N user terminals. The multiple data streams may be multiplexed to the N user terminals by means of weighting with the precoding matrix. In addition, spatial multiplexing is implemented for the pilot signal by means of weighting with the precoding matrix, and the to-be-transmitted pilot signal obtained by means of weighting no longer depends on a CRS for differentiating space-division user terminal layer numbers. Therefore, spatial multiplexing can be performed for more user terminals, and utilization of time-frequency resources can be improved.

The following describes another user terminal provided in this embodiment of the present invention. As shown in FIG. 12, a user terminal 1200 includes:

a processor 1201, a memory 1202, and a physical transmit antenna 1203 (The user terminal 1200 may include one or more processors 1201, and in an example in FIG. 12, the user terminal 1200 includes one processor.). In some embodiments of the present invention, the processor 1201, the memory 1202, and the transmit antenna 1203 may be connected by using a bus or in another manner. For example, in FIG. 12, a bus is used for a connection, and a quantity of physical transmit antennas 1203 is K.

The memory 1202 is configured to store data required by the processor during an execution process, a program instruction, and generated data.

The processor 1201 is configured to execute the multi-user multiplexing method provided in the foregoing method embodiment from the perspective of a user terminal.

It can be learned from the description of the present invention in the foregoing embodiment that a base station sends to-be-transmitted data streams, to-be-transmitted pilot signals, and to-be-transmitted scheduling information to N user terminals by using K physical transmit antennas. All the user terminals receive the transmitted data streams and the transmitted pilot signals by using the K physical transmit antennas. No mutual interference is generated between the user terminals, and spatial multiplexing is implemented between the N user terminals. Multiple data streams may be multiplexed to the N user terminals by means of weighting with a precoding matrix. In addition, spatial multiplexing is implemented for a pilot signal by means of weighting with the precoding matrix, and the to-be-transmitted pilot signal obtained by means of weighting no longer depends on a CRS for differentiating space-division user terminal layer numbers. Therefore, spatial multiplexing can be performed for more user terminals, and utilization of time-frequency resources can be improved.

In addition, it should be noted that the described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

Based on the foregoing descriptions of the embodiments, a person skilled in the art may clearly understand that the present invention may be implemented by software in addition to necessary universal hardware or by dedicated hardware only, including a dedicated integrated circuit, a dedicated CPU, a dedicated memory, a dedicated component and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for the present invention, software program implementation is a better implementation manner in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described in the embodiments of the present invention.

In conclusion, the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A multi-user multiplexing method comprising:

   • weighting (101), by a base station by using a precoding matrix, multiple data streams that need to be transmitted to N user terminals, to obtain to-be-transmitted data streams that are mapped onto K physical transmit antennas;
   • weighting (102), by the base station by using the precoding matrix, a pilot signal that needs to be transmitted to the N user terminals, to obtain to-be-transmitted pilot signals that are mapped onto the K physical transmit antennas,
   wherein if one antenna port is configured for the base station, the weighting, by the base station by using the precoding matrix, a pilot signal that needs to be transmitted to the N user terminals, to obtain to-be-transmitted pilot signals that are mapped onto the K physical transmit antennas comprises: weighting the pilot signal in the following manner:

   $Y_0 = \text{sum}([V_1, V_2, ... V_N] \times p_0$; wherein $Y_0$ is the to-be-transmitted pilot signals, $[V_1, V_2, .. V_N]$ is a $K \times N$ precoding matrix, $\text{sum}([V_1, V_2, ... V_N])$ is a result obtained by performing a summation operation on column vectors in all columns of $[V_1, V_2, ... V_N]$, any column of $[V_1, V_2, ... V_N]$ is denoted by $V_i$, i is a positive integer greater than 0 and less than or equal to N, $V_i$ is a total of $l_i$ precoding value vectors assigned by the base station to the $i^{th}$ user terminal of the N user terminals, $V_i$ is a $K \times 1$ column vector, and po is the pilot signal, and
   wherein if t antenna ports are configured for the base station, wherein t is a positive integer greater than 1, the weighting, by the base station by using the precoding matrix, the pilot signal that needs to be transmitted to the N user terminals, to obtain to-be-transmitted pilot signals that are mapped onto the K physical transmit antennas comprises:

∘ separately mapping, by the base station, the pilot signal to the t antenna ports, wherein a pilot signal on the $(m-1)^{th}$ antenna port is mapped onto the K physical transmit antennas in the following manner:

$$Y_{(m-1)} = \text{sum}([V_1 (:,m), V_2 (:,m), ... V_N (:,m)]) \times p_{(m-1)};$$

wherein

$Y_{(m-1)}$ is a to-be-transmitted pilot signal that is mapped onto the $(m-1)^{th}$ antenna port, $[V_1, V_2, ... V_N]$ is a KxM precoding matrix, any column of $[V_1, V_2, ... V_N]$ is denoted by $V_i$, i is a positive integer greater than 0 and less than or equal to N, $V_i$ is a $K \times l_i$ matrix, $V_i$ is a total of $l_i$ precoding value vectors assigned by the base station to the $i^{th}$ user terminal of the N user terminals, and when $m \le l_i$, $V_i (:,m)$ denotes the $m^{th}$ column vector of $V_i$, and when $m > l_i$, $V_i (:,m)$ is a $K \times 1$ vector with all 0s, wherein m is a positive integer greater than or equal to 1 and less than or equal to t, $\text{sum}([V_1 (:,m), V_2 (:,m), ... V_N (:,m)])$ is a result obtained by performing a summation operation on column vectors in all columns of $[V_1 (:,m), V_2 (:,m), ... V_N (:,m)]$, and $p_{(m-1)}$ is a pilot signal corresponding to the $(m-1)^{th}$ antenna port; and

• sending (103), by the base station, the to-be-transmitted data streams and the to-be-transmitted pilot signals to the N user terminals by using the K physical transmit antennas, wherein the to-be-transmitted data streams and the to-be-transmitted pilot signals are mapped onto different time-frequency resources; wherein N is a positive integer greater than or equal to 2, K is a positive integer, and the precoding matrix is calculated according to characteristics of channels from the K physical transmit antennas to the N user terminals.

2. A base station, comprising a processing module (901) and a transmission module (902), wherein:

• the processing module (901) is configured to weight, by using a precoding matrix, multiple data streams that need to be transmitted to N user terminals, to obtain to-be-transmitted data streams that are mapped onto K physical transmit antennas;
• the processing module (901) is further configured to weight, by using the precoding matrix, a pilot signal that needs to be transmitted to the N user terminals, to obtain to-be-transmitted pilot signals that are mapped onto the K physical transmit antennas,
wherein if one antenna port is configured for the base station, the processing module is specifically configured to weight the pilot signal in the following manner:

$Y_0 = \text{sum}([V_1, V_2, ... V_N] \times p_0$; wherein $Y_0$ is the to-be-transmitted pilot signals, $[V_1, V_2, ... V_N]$ is a $K \times N$ precoding matrix, $\text{sum}([V_1, V_2, ... V_N])$ is a result obtained by performing a summation operation on column vectors in all columns of $[V_1, V_2, ... V_N]$, any column of $[V_1, V_2, ... V_N]$ is denoted by $V_i$, i is a positive integer greater than 0 and less than or equal to N, $V_i$ is a total of $l_i$ precoding value vectors assigned by the base station to the $i^{th}$ user terminal of the N user terminals, $V_i$ is a $K \times 1$ column vector, and po is the pilot signal, and
wherein if t antenna ports are configured for the base station, wherein t is a positive integer greater than 1, that the processing module (901) is configured to weight, by using the precoding matrix, the pilot signal that needs to be transmitted to the N user terminals, to obtain to-be-transmitted pilot signals that are mapped onto the K physical transmit antennas comprises:

∘ the processing module (901) is specifically configured to separately map the pilot signal to the t antenna ports, wherein a pilot signal on the $(m-1)^{th}$ antenna port is mapped onto the K physical transmit antennas in the following manner:

$$Y_{(m-1)} = \text{sum}([V_1 (:,m), V_2 (:,m), ... V_N (:,m)]) \times p_{(m-1)};$$

wherein

$Y_{(m-1)}$ is a to-be-transmitted pilot signal that is mapped onto the $(m-1)^{th}$ antenna port, $[V_1, V_2, ... V_N]$ is a KxM precoding matrix, any column of $[V_1, V_2, ... V_N]$ is denoted by $V_i$, i is a positive integer greater than 0 and less than or equal to N, $V_i$ is a $K \times l_i$ matrix, $V_i$ is a total of $l_i$ precoding value vectors assigned by the base station to the $i^{th}$ user terminal of the N user terminals, and when $m \le l_i$, $V_i (:,m)$ denotes the $m^{th}$ column vector of $V_i$, and when $m > l_i$, $V_i (:,m)$ is a $K \times 1$ vector with all 0s, wherein m is a positive integer greater than or equal to 1 and less than or equal to t, $\text{sum}([V_1 (:,m), V_2 (:,m), ... V_N (:,m)])$ is a result obtained by performing a summation operation on column vectors in all columns of $[V_1 (:,m), V_2 (:,m), ... V_N (:,m)]$, and $p_{(m-1)}$ is a pilot signal corresponding to the $(m-1)^{th}$ antenna port; and

- the transmission module (902) is configured to send the to-be-transmitted data streams and the to-be-transmitted pilot signals to the N user terminals by using the K physical transmit antennas, wherein the to-be-transmitted data streams and the to-be-transmitted pilot signals are mapped onto different time-frequency resources, and N is a positive integer greater than or equal to 2, K is a positive integer, and the precoding matrix is calculated according to characteristics of channels from the K physical transmit antennas to the N user terminals.

3. The base station according to claim 2, wherein if only one antenna port is configured for the base station, the processing module is specifically configured to weight N data streams in the following manner:

$$[X_1, X_2, ... X_K] = [V_1, V_2, ... V_N] \times [s_1; s_2; ...; s_N];$$

wherein

$[X_1, X_2, ... X_K]$ is the to-be-transmitted data streams, $[V_1, V_2, ... V_N]$ is a $K \times N$ precoding matrix, any column of $[V_1, V_2, ... V_N]$ is denoted by $V_i$, i is a positive integer greater than 0 and less than or equal to N, $V_i$ is a total of $l_i$ precoding value vectors assigned by the base station to the $i^{th}$ user terminal of the N user terminals, $V_i$ is a $K \times 1$ column vector, $[s_1; s_2; ...; s_N]$ is the N data streams denoted by an $N \times 1$ column vector, any column of $[s_1; s_2; ...; s_N]$ is denoted by $s_i$, and $s_i$ is a data stream that needs to be transmitted by the base station to the $i^{th}$ user terminal of the N user terminals.

4. The base station according to any one of claims 2 to 3, wherein the processing module is further configured to: before the transmission module sends the to-be-transmitted data streams and the to-be-transmitted pilot signals to the N user terminals by using the K physical transmit antennas, weight, by using the precoding matrix, scheduling information that needs to be transmitted to the N user terminals, to obtain to-be-transmitted scheduling information that is mapped onto the K physical transmit antennas, wherein the to-be-transmitted data streams, the to-be-transmitted pilot signals, and the to-be-transmitted scheduling information are mapped onto different time-frequency resources.

5. The base station according to claim 4, wherein if only one antenna port is configured for the base station, the processing module is specifically configured to weight N pieces of scheduling information in the following manner:

$$[Z_1, Z_2, ... Z_K] = [V_1, V_2, ... V_N] \times [g_1; g_2; ...; g_N];$$

wherein

$[Z_1, Z_2, ... Z_K]$ is the to-be-transmitted scheduling information, $[V_1, V_2, ... V_N]$ is a $K \times N$ precoding matrix, any column of $[V_1, V_2, ... V_N]$ is denoted by $V_i$, i is a positive integer greater than 0 and less than or equal to N, $V_i$ is a total of $l_i$ precoding value vectors assigned by the base station to the $i^{th}$ user terminal of the N user terminals, $V_i$ is a $K \times 1$ column vector, $[g_1; g_2; ...; g_N]$ is the N pieces of scheduling information denoted by an $N \times 1$ column vector, any column of $[g_1; g_2; ...; g_N]$ is denoted by $g_i$, and $g_i$ is scheduling information that needs to be transmitted by the base station to the $i^{th}$ user terminal of the N user terminals; or
wherein if t antenna ports are configured for the base station, wherein t is a positive integer greater than 1, the processing module is configured to perform space frequency block coding on the scheduling information that needs to be transmitted to the N user terminals, to obtain N code blocks that are respectively corresponding to the N user terminals, wherein a code block corresponding to the $i^{th}$ user terminal is $[g_i (1), ..., g_i (m) ..., g_i (t)]$, i is a positive integer greater than 0 and less than or equal to N, m is a positive integer greater than 0 and less than or equal to t, and $g_i (m)$ denotes an information symbol that needs to be mapped onto the $(m-1)^{th}$ antenna port after the space frequency block coding; and the processing module is configured to separately map, to the t antenna ports, the code blocks that are corresponding to all the user terminals, wherein the $m^{th}$ code block of the N user terminals is mapped onto the $(m-1)^{th}$ antenna port in the following manner:

$$[Z_{i,1}, Z_{i,2}, ... Z_{i,K}] = [V_1(:,m), V_2(:,m), ... V_N(:,m)] \times [g_1(m), ..., g_N(m)];$$

wherein
$[Z_{i,1}, Z_{i,2}, ... Z_{i,K}]$ is to-be-transmitted scheduling information assigned by the base station to the $i^{th}$ user terminal of the N user terminals, $[V_1, V_2, ... V_N]$ is a KxM precoding matrix, any column of $[V_1, V_2, ... V_N]$ is denoted by $V_i$, i is a positive integer greater than 0 and less than or equal to N, $V_i$ is a $K \times I_i$ matrix, $V_i$ is a total of $I_i$ precoding value vectors assigned by the base station to the $i^{th}$ user terminal of the N user terminals, and m is a positive integer greater than 0 and less than or equal to t, and when $m \leq I_i$, $V_i(:,m)$ denotes the $m^{th}$ column vector of $V_i$, and when $m > I_i$, $V_i(:,m)$ is a $K \times 1$ vector with all 0s.

6. The base station according to any one of claims 2 to 5, wherein the processing module is further configured to: before the transmission module sends the to-be-transmitted data streams and the to-be-transmitted pilot signals to the N user terminals by using the K physical transmit antennas, weight a common signal by using the precoding matrix, to obtain a first to-be-transmitted common signal that is mapped onto the K physical transmit antennas, wherein the to-be-transmitted data streams, the to-be-transmitted pilot signals, and the first to-be-transmitted common signal are mapped onto different time-frequency resources.

7. The base station according to any one of claims 2 to 5, wherein the processing module is further configured to: before the transmission module sends the to-be-transmitted data streams and the to-be-transmitted pilot signals to the N user terminals by using the K physical transmit antennas, weight a common signal by using the precoding matrix or a mapping matrix in a time-division manner, to obtain a second to-be-transmitted common signal that is mapped onto the K physical transmit antennas, wherein the mapping matrix remains unchanged when the channel characteristics or scheduled user terminals change, and the to-be-transmitted data streams, the to-be-transmitted pilot signals, and the second to-be-transmitted common signal are mapped onto different time-frequency resources.

8. The base station according to either one of claims 6 and 7, wherein K is greater than N.

9. The base station according to claim 6, wherein if only one antenna port is configured for the base station, the processing module is specifically configured to weight the common signal in the following manner:

$$P = sum([V_1, V_2, ... V_N]) \times c;$$

wherein
P is the first to-be-transmitted common signal, $[V_1, V_2, ... V_N]$ is a $K \times N$ precoding matrix, any column of $[V_1, V_2, ... V_N]$ is denoted by $V_i$, i is a positive integer greater than 0 and less than or equal to N, $V_i$ is a total of $I_i$ precoding value vectors assigned by the base station to the $i^{th}$ user terminal of the N user terminals, $V_i$ is a $K \times 1$ column vector, $sum([V_1, V_2, ... V_N])$ is a result obtained by performing a summation operation on column vectors in all columns of $[V_1, V_2, ... V_N]$, and c is the common signal;or
wherein if t antenna ports are configured for the base station, wherein t is a positive integer greater than 1, the processing module is configured to perform space frequency block coding on the common signal to obtain t coded information symbols that are corresponding to the t antenna ports, wherein a coded information symbol that is corresponding to the $(m-1)^{th}$ antenna port is denoted by $c_m$, and m is a positive integer greater than 0 and less than or equal to t; and
the processing module is configured to separately map, to the t antenna ports, the code blocks that are corresponding to all the user terminals, wherein the $m^{th}$ code block is mapped onto the $(m-1)^{th}$ antenna port in the following manner:

$$P_m = sum([V_1(:,m), V_2(:,m), ... V_N(:,m)]) \times c_m;$$

wherein
$P_m$ is the first to-be-transmitted common signal that is mapped onto the $(m-1)^{th}$ antenna port, $[V_1, V_2, ... V_N]$ is a KxM precoding matrix, any column of $[V_1, V_2, ... V_N]$ is denoted by $V_i$, i is a positive integer greater than 0 and less than or equal to N, $V_i$ is a $K \times I_i$ matrix, $V_i$ is a total of $I_i$ precoding value vectors assigned by the base station to the $i^{th}$ user terminal of the N user terminals, and when $m \leq I_i$, $V_i(:,m)$ denotes the $m^{th}$ column vector of $V_i$, and when $m > I_i$, $V_i(:,m)$ is a $K \times 1$ vector with all 0s, wherein m is a positive integer greater than or equal to 1 and less than or equal to

t, sum([V$_1$ (:,m),V$_2$ (:,m),... V$_N$ (:,m)]) is a result obtained by performing a summation operation on column vectors in all columns of [V$_1$ (:,m),V$_2$ (:,m),... V$_N$ (:,m)], and c$_m$ is a common signal corresponding to the (m-1)$^{th}$ antenna port.

10. The base station according to any one of claims 2 to 9, wherein the base station further comprises:
a calculation module (903), configured to: when the channel characteristics or the scheduled user terminals change, recalculate weight values of the precoding matrix used to weight the data streams and the pilot signal.

**Patentansprüche**

1. Mehrnutzer-Multiplexierverfahren, das Folgendes umfasst:

• Gewichten (101), durch eine Basisstation unter Verwendung einer Vorcodierungsmatrix, mehrerer Datenströme, die an N Nutzer-Endgeräte gesendet werden müssen, um zu sendende Datenströme zu erhalten, die auf K physische Sendeantennen abgebildet werden;
• Gewichten (102), durch die Basisstation unter Verwendung der Vorcodierungsmatrix, eines Pilotsignals, das zu den N Nutzer-Endgeräten gesendet werden muss, um zu sendende Pilotsignale zu erhalten, die auf die K physischen Sendeantennen abgebildet werden,
wobei, falls ein Antennenport für die Basisstation ×onfiguriert ist, das Gewichten, durch die Basisstation unter Verwendung der Vorcodierungsmatrix, eines Pilotsignals, das zu den N Nutzer-Endgeräten gesendet werden muss, um zu sendende Pilotsignale zu erhalten, die auf die K physischen Sendeantennen abgebildet werden, umfasst, das Pilotsignal in der folgenden Weise zu gewichten:

$Y_0$ = sum([V$_1$,V$_2$,...V$_N$]) × p$_0$; wobei Y$_0$ die zu sendenden Pilotsignale ist, [V$_1$,V$_2$,...V$_N$] eine K×N-Vorcodierungsmatrix ist, sum([V$_1$,V$_2$,...V$_N$]) ein Ergebnis ist, das durch Ausführen einer Summierungsoperation an Spaltenvektoren in allen Spalten von [V$_1$,V$_2$,...V$_N$] erhalten wird, wobei jede Spalte von [V$_1$,V$_2$,...V$_N$] durch V$_i$ bezeichnet wird, wobei i eine positive ganze Zahl größer als 0 und nicht größer als N ist, V$_i$ eine Summe von I$_i$ Vorcodierungswertvektoren ist, die durch die Basisstation dem i-ten Nutzer-Endgerät der N Nutzer-Endgeräte zugewiesen werden, V$_i$ ein K×1-Spaltenvektor ist, und p$_0$ das Pilotsignal ist, und
wobei, falls t Antennenports für die Basisstation konfiguriert sind, wobei t eine positive ganze Zahl größer als 1 ist, das Gewichten, durch die Basisstation unter Verwendung der Vorcodierungsmatrix, des Pilotsignals, das zu den N Nutzer-Endgeräten gesendet werden muss, um zu sendende Pilotsignale zu erhalten, die auf die K physischen Sendeantennen abgebildet werden, Folgendes umfasst:

∘ separates Abbilden, durch die Basisstation, des Pilotsignals auf die t Antennenports, wobei ein Pilotsignal auf dem (m-1)-ten Antennenport in der folgenden Weise auf die K physischen Sendeantennen abgebildet wird:

$$Y_{(m-1)} = \text{sum}([V_1 (:,m), V_2 (:,m),...V_N (:,m)]) \times p_{(m-1)};$$

wobei
Y$_{(m-1)}$ ein zu sendenden Pilotsignal ist, das auf den (m-1)-ten Antennenport abgebildet wird, [V$_1$,V$_2$,... V$_N$] eine KxN-Vorcodierungsmatrix ist, wobei jede Spalte von [V$_1$,V$_2$, ... V$_N$] durch V$_i$ bezeichnet wird, wobei i eine positive ganze Zahl größer als 0 und nicht größer als N ist, V$_i$ eine Kxli-Matrix ist, V$_i$ eine Summe von I$_i$ Vorcodierungswertvektoren ist, die durch die Basisstation dem i-ten Nutzer-Endgerät der N Nutzer-Endgeräte zugewiesen werden, und wenn m ≤ I$_i$, so bezeichnet V$_i$ (:,m) den m-ten Spaltenvektor von V$_i$, und wenn m > I$_i$, so ist V$_i$ (:,m) ein K×1-Vektor mit alle Nullen, wobei m eine positive ganze Zahl von mindestens 1 und nicht größer als t ist, sum([V$_1$ (:,m),V$_2$ (:,m),... V$_N$ (:,m)]) ein Ergebnis ist, das durch Ausführen einer Summierungsoperation an Spaltenvektoren in allen Spalten von [V$_1$ (:,m),V$_2$ (:,m),... V$_N$ (:,m)] erhalten wird, und p$_{(m-1)}$ ein Pilotsignal ist, das dem (m-1)-ten Antennenport entspricht; und

• Senden (103), durch die Basisstation, der zu sendenden Datenströme und der zu sendenden Pilotsignale zu den N Nutzer-Endgeräten unter Verwendung der K physischen Sendeantennen, wobei die zu sendenden Datenströme und die zu sendenden Pilotsignale auf verschiedene Zeit-Frequenz-Ressourcen abgebildet werden;

wobei N eine positive ganze Zahl von mindestens 2 ist, K eine positive ganze Zahl ist, und die Vorcodierungsmatrix gemäß Eigenschaften von Kanälen von den K physischen Sendeantennen zu den N Nutzer-Endgeräten berechnet wird.

2. Basisstation, die ein Verarbeitungsmodul (901) und ein Sendemodul (902) umfasst, wobei:

• das Verarbeitungsmodul (901) für Folgendes konfiguriert ist: Gewichten, unter Verwendung einer Vorcodierungsmatrix, mehrerer Datenströme, die an N Nutzer-Endgeräte gesendet werden müssen, um zu sendende Datenströme zu erhalten, die auf K physische Sendeantennen abgebildet werden;
• das Verarbeitungsmodul (901) des Weiteren für Folgendes konfiguriert ist: Gewicht, unter Verwendung der Vorcodierungsmatrix, eines Pilotsignals, das zu den N Nutzer-Endgeräten gesendet werden muss, um zu sendende Pilotsignale zu erhalten, die auf die K physischen Sendeantennen abgebildet werden, wobei, falls ein Antennenport für die Basisstation konfiguriert ist, das Verarbeitungsmodul speziell dafür konfiguriert ist, ein Pilotsignal in der folgenden Weise zu gewichten:

$Y_0$ = sum($[V_1, V_2, ... V_N]$) $\times$ $p_0$; wobei $Y_0$ die zu sendenden Pilotsignale ist, $[V_1, V_2, ... V_N]$ eine KxN-Vorcodierungsmatrix ist, sum($[V_1, V_2, ... V_N]$) ein Ergebnis ist, das durch Ausführen einer Summierungsoperation an Spaltenvektoren in allen Spalten von $[V_1, V_2, ... V_N]$ erhalten wird, wobei jede Spalte von $[V_1, V_2, ... V_N]$ durch $V_i$ bezeichnet wird, wobei i eine positive ganze Zahl größer als 0 und nicht größer als N ist, $V_i$ eine Summe von $I_i$ Vorcodierungswertvektoren ist, die durch die Basisstation dem i-ten Nutzer-Endgerät der N Nutzer-Endgeräte zugewiesen werden, $V_i$ ein K$\times$1-Spaltenvektor ist, und po das Pilotsignal ist, und wobei, falls t Antennenports für die Basisstation konfiguriert sind, wobei t eine positive ganze Zahl größer als 1 ist, der Vorgang, bei dem das Verarbeitungsmodul (901) dafür konfiguriert ist, unter Verwendung der Vorcodierungsmatrix das Pilotsignal, das zu den N Nutzer-Endgeräten gesendet werden muss, um zu sendende Pilotsignale zu erhalten, die auf die K physischen Sendeantennen abgebildet werden, Folgendes umfasst:

◦ das Verarbeitungsmodul (901) ist speziell dafür konfiguriert, das Pilotsignal separat auf die t Antennenports abzubilden, wobei ein Pilotsignal auf dem (m-1)-ten Antennenport in der folgenden Weise auf die K physischen Sendeantennen abgebildet wird:

$$Y_{(m-1)} = \mathrm{sum}([V_1(:,m), V_2(:,m), ... V_N(:,m)]) \times p_{(m-1)};$$

wobei
$Y_{(m-1)}$ ein zu sendenden Pilotsignal ist, das auf den (m-1)-ten Antennenport abgebildet wird, $[V_1, V_2, ... V_N]$ eine KxN-Vorcodierungsmatrix ist, wobei jede Spalte von $[V_1, V_2, ... V_N]$ durch $V_i$ bezeichnet wird, wobei i eine positive ganze Zahl größer als 0 und nicht größer als N ist, $V_i$ eine Kxli-Matrix ist, $V_i$ eine Summe von $I_i$ Vorcodierungswertvektoren ist, die durch die Basisstation dem i-ten Nutzer-Endgerät der N Nutzer-Endgeräte zugewiesen werden, und wenn m $\leq I_i$, so bezeichnet $V_i(:,m)$ den m-ten Spaltenvektor von $V_i$, und wenn m > $I_i$, so ist $V_i(:,m)$ ein K$\times$1-Vektor mit alle Nullen, wobei m eine positive ganze Zahl von mindestens 1 und nicht größer als t ist, sum($[V_1(:,m), V_2(:,m), ... V_N(:,m)]$) ein Ergebnis ist, das durch Ausführen einer Summierungsoperation an Spaltenvektoren in allen Spalten von $[V_1(:,m), V_2(:,m), ... V_N(:,m)]$ erhalten wird, und $p_{(m-1)}$ ein Pilotsignal ist, das dem (m-1)-ten Antennenport entspricht; und

• das Sendemodul (902) dafür konfiguriert ist, die zu sendenden Datenströme und die zu sendenden Pilotsignale unter Verwendung der K physischen Sendeantennen zu den N Nutzer-Endgeräten zu senden, wobei die zu sendenden Datenströme und die zu sendenden Pilotsignale auf verschiedene Zeit-Frequenz-Ressourcen abgebildet werden; und N eine positive ganze Zahl von mindestens 2 ist, K eine positive ganze Zahl ist, und die Vorcodierungsmatrix gemäß Eigenschaften von Kanälen von den K physischen Sendeantennen zu den N Nutzer-Endgeräten berechnet wird.

3. Basisstation nach Anspruch 2, wobei, falls nur ein einzelner Antennenport für die Basisstation konfiguriert ist, das Verarbeitungsmodul speziell dafür konfiguriert ist, N Datenströme in der folgenden Weise zu gewichten:

$$[X_1, X_2, ... X_K] = [V_1, V_2, ... V_N] \times [s_1; s_2; ...; s_N];$$

wobei

$[X_1, X_2, ... X_K]$ die zu sendenden Datenströme ist, $[V_1, V_2, ... V_N]$ eine KxN-Vorcodierungsmatrix ist, wobei jede Spalte von $[V_1, V_2, ... V_N]$ durch $V_i$ bezeichnet wird, wobei i eine positive ganze Zahl größer als 0 und nicht größer als N ist, $V_i$ eine Summe von $I_i$ Vorcodierungswertvektoren ist, die durch die Basisstation dem i-ten Nutzer-Endgerät der N Nutzer-Endgeräte zugewiesen werden, $V_i$ ein $K \times 1$-Spaltenvektor ist, $[s_1; s_2; ...; s_N]$ die N Datenströme ist, die durch einen $N \times 1$-Spaltenvektor bezeichnet werden, jede Spalte von $[s_1; s_2; ...; s_N]$ durch $s_i$ bezeichnet wird, und $s_i$ ein Datenstrom ist, der durch die Basisstation zu dem i-ten Nutzer-Endgerät der N Nutzer-Endgeräte gesendet werden muss.

4. Basisstation nach einem der Ansprüche 2 und 3, wobei das Verarbeitungsmodul des Weiteren für Folgendes konfiguriert ist: bevor das Sendemodul die zu sendenden Datenströme und die zu sendenden Pilotsignale unter Verwendung der K physischen Sendeantennen zu den N Nutzer-Endgeräten sendet, Gewichten, unter Verwendung der Vorcodierungsmatrix, von Disponierungsinformationen, die zu den N Nutzer-Endgeräten gesendet werden müssen, um zu sendende Disponierungsinformationen zu erhalten, die auf die K physischen Sendeantennen abgebildet werden, wobei die zu sendenden Datenströme, die zu sendenden Pilotsignale und die zu sendenden Disponierungsinformationen auf verschiedene Zeit-Frequenz-Ressourcen abgebildet werden.

5. Basisstation nach Anspruch 4, wobei, falls nur ein einzelner Antennenport für die Basisstation konfiguriert ist, das Verarbeitungsmodul speziell dafür konfiguriert ist, N Teile von Disponierungsinformationen in der folgenden Weise zu gewichten:

$$[Z_1, Z_2, ... Z_K] = [V_1, V_2, ... V_N] \times [g_1; g_2; ...; g_N];$$

wobei

$[Z_1, Z_2, ... Z_K]$ die zu sendenden Disponierungsinformationen ist, $[V_1, V_2, ... V_N]$ eine $K \times N$-Vorcodierungsmatrix ist, wobei jede Spalte von $[V_1, V_2, ... V_N]$ durch $V_i$ bezeichnet wird, wobei i eine positive ganze Zahl größer als 0 und nicht größer als N ist, $V_i$ eine Summe von $I_i$ Vorcodierungswertvektoren ist, die durch die Basisstation dem i-ten Nutzer-Endgerät der N Nutzer-Endgeräte zugewiesen werden, $V_i$ ein $K \times 1$-Spaltenvektor ist, $[g_1; g_2; ...; g_N]$ die N Teile von Disponierungsinformationen ist, die durch einen $N \times 1$-Spaltenvektor bezeichnet werden, jede Spalte von $[g_1; g_2; ...; g_N]$ durch $g_i$ bezeichnet wird, und $g_i$ Disponierungsinformationen sind, die durch die Basisstation zu dem i-ten Nutzer-Endgerät der N Nutzer-Endgeräte gesendet werden müssen; oder wobei, falls t Antennenports für die Basisstation konfiguriert sind, wobei t eine positive ganze Zahl größer als 1 ist, das Verarbeitungsmodul dafür konfiguriert ist, Raum-Frequenz-Block-Codierung an den Disponierungsinformationen auszuführen, die zu den N Nutzer-Endgeräten gesendet werden müssen, um N Code-Blöcke zu erhalten, die jeweils den N Nutzer-Endgeräten entsprechen, wobei ein Code-Block, der dem i-ten Nutzer-Endgerät entspricht, $[g_i(1), ..., g_i(m) ... , g_i(t)]$ ist, i eine positive ganze Zahl größer als 0 und nicht größer als N ist, m eine positive ganze Zahl größer als 0 und nicht größer als t ist, und $g_i(m)$ ein Informationssymbol bezeichnet, das nach der Raum-Frequenz-Block-Codierung auf den (m-1)-ten Antennenport abgebildet werden muss; und das Verarbeitungsmodul dafür konfiguriert ist, die Code-Blöcke, die allen Nutzer-Endgeräten entsprechen, separat auf die t Antennenports abzubilden, wobei der m-te Code-Block der N Nutzer-Endgeräte in der folgenden Weise auf den (m-1)-ten Antennenport abgebildet wird:

$$[Z_{i,1}, Z_{i,2}, ... Z_{i,K}] = [V_1(:,m), V_2(:,m), ... V_N(:,m)] \times [g_1(m), ..., g_N(m)];$$

wobei

$[Z_{i,1}, Z_{i,2}, ... Z_{i,K}]$ zu sendende Disponierungsinformationen ist, die durch die Basisstation dem i-ten Nutzer-Endgerät der N Nutzer-Endgeräte zugewiesen werden, $[V_1, V_2, ... V_N]$ eine KxN-Vorcodierungsmatrix ist, wobei jede Spalte von $[V_1, V_2, ... V_N]$ durch $V_i$ bezeichnet wird, wobei i eine positive ganze Zahl größer als 0 und nicht größer als N ist, $V_i$ eine $K \times I_i$-Matrix ist, $V_i$ eine Summe von $I_i$ Vorcodierungswertvektoren ist, die durch die Basisstation dem i-ten Nutzer-Endgerät der N Nutzer-Endgeräte zugewiesen werden, und m eine positive ganze Zahl größer als 0 und nicht größer als t ist, und wenn $m \leq I_i$ ist, so bezeichnet $V_i(:,m)$ den m-ten Spaltenvektor von $V_i$, und wenn $m > I_i$, so ist $V_i(:,m)$ ein $K \times 1$-Vektor mit allen Nullen.

6. Basisstation nach einem der Ansprüche 2 bis 5, wobei das Verarbeitungsmodul des Weiteren für Folgendes konfiguriert ist: bevor das Sendemodul die zu sendenden Datenströme und die zu sendenden Pilotsignale unter Verwendung der K physischen Sendeantennen zu den N Nutzer-Endgeräten sendet, Gewichten eines gemeinsamen Signals unter Verwendung der Vorcodierungsmatrix, um ein erstes zu sendendes gemeinsames Signal zu erhalten, die auf die K physischen Sendeantennen abgebildet werden, wobei die zu sendenden Datenströme, die zu sendenden Pilotsignale und das erste zu sendende gemeinsame Signal auf verschiedene Zeit-Frequenz-Ressourcen abgebildet werden.

7. Basisstation nach einem der Ansprüche 2 bis 5, wobei das Verarbeitungsmodul des Weiteren für Folgendes konfiguriert ist: bevor das Sendemodul die zu sendenden Datenströme und die zu sendenden Pilotsignale unter Verwendung der K physischen Sendeantennen zu den N Nutzer-Endgeräten sendet, Gewichten eines gemeinsamen Signals unter Verwendung der Vorcodierungsmatrix oder einer Abbildungsmatrix mittels Zeitmultiplexierung, um ein zweites zu sendendes gemeinsames Signal zu erhalten, das auf die K physischen Sendeantennen abgebildet wird, wobei die Abbildungsmatrix unverändert bleibt, wenn sich die Kanaleigenschaften oder die disponierten Nutzer-Endgeräte ändern, und die zu sendenden Datenströme, die zu sendenden Pilotsignale und das zweite zu sendende gemeinsame Signal auf verschiedene Zeit-Frequenz-Ressourcen abgebildet werden.

8. Basisstation nach einem der Ansprüche 6 und 7, wobei K größer als N ist.

9. Basisstation nach Anspruch 6, wobei, falls nur ein einzelner Antennenport für die Basisstation konfiguriert ist, das Verarbeitungsmodul speziell dafür konfiguriert ist, das gemeinsame Signal in der folgenden Weise zu gewichten:

$$P = \mathrm{sum}([V_1, V_2, \ldots V_N]) \times c;$$

wobei
P das erste zu sendende gemeinsame Signal ist, $[V_1, V_2, \ldots V_N]$ eine $K \times N$-Vorcodierungsmatrix ist, wobei jede Spalte von $[V_1, V_2, \ldots V_N]$ durch $V_i$ bezeichnet wird, wobei i eine positive ganze Zahl größer als 0 und nicht größer als N ist, $V_i$ eine Summe von $I_i$ Vorcodierungswertvektoren ist, die durch die Basisstation dem i-ten Nutzer-Endgerät der N Nutzer-Endgeräte zugewiesen werden, $V_i$ ein $K \times 1$-Spaltenvektor ist, $\mathrm{sum}([V_1, V_2, \ldots V_N])$ ein Ergebnis ist, das durch Ausführen einer Summierungsoperation an Spaltenvektoren in allen Spalten von $[V_1, V_2, \ldots V_N]$ erhalten wird, und c das gemeinsame Signal ist; oder
wobei, falls t Antennenports für die Basisstation konfiguriert sind, wobei t eine positive ganze Zahl größer als 1 ist, das Verarbeitungsmodul dafür konfiguriert ist, eine Raum-Frequenz-Block-Codierung an dem gemeinsamen Signal auszuführen, um t codierte Informationssymbole zu erhalten, die den t Antennenports entsprechen, wobei ein codiertes Informationssymbol, das dem (m-1)-ten Antennenport entspricht, durch $c_m$ bezeichnet wird, und m eine positive ganze Zahl größer als 0 und nicht größer als t ist; und
das Verarbeitungsmodul dafür konfiguriert ist, die Code-Blöcke, die allen Nutzer-Endgeräten entsprechen, separat auf die t Antennenports abzubilden, wobei der m-te Code-Block in der folgenden Weise auf den (m-1)-ten Antennenport abgebildet wird:

$$P_m = \mathrm{sum}([V_1(:,m), V_2(:,m), \ldots V_N(:,m)]) \times c_m;$$

wobei
$P_m$ das erste zu sendende gemeinsame Signal ist, das auf den (m-1)-ten Antennenport abgebildet wird, $[V_1, V_2, \ldots V_N]$ eine $K \times N$-Vorcodierungsmatrix ist, wobei jede Spalte von $[V_1, V_2, \ldots V_N]$ durch $V_i$ bezeichnet wird, wobei i eine positive ganze Zahl größer als 0 und nicht größer als N ist, $V_i$ eine $K \times I_i$-Matrix ist, $V_i$ eine Summe von $I_i$ Vorcodierungswertvektoren ist, die durch die Basisstation dem i-ten Nutzer-Endgerät der N Nutzer-Endgeräte zugewiesen werden, und wenn $m \leq I_i$, so bezeichnet $V_i(:,m)$ den m-ten Spaltenvektor von $V_i$, und wenn $m > I_i$, so ist $V_i(:,m)$ ein $K \times 1$-Vektor mit alle Nullen, wobei m eine positive ganze Zahl von mindestens 1 und nicht größer als t ist, $\mathrm{sum}([V_1(:,m), V_2(:,m), \ldots V_N(:,m)])$ ein Ergebnis ist, das durch Ausführen einer Summierungsoperation an Spaltenvektoren in allen Spalten von $[V_1(:,m), V_2(:,m), \ldots V_N(:,m)]$ erhalten wird, und $c_m$ ein gemeinsames Signal ist, das dem (m-1)-ten Antennenport entspricht.

10. Basisstation nach einem der Ansprüche 2 bis 9, wobei die Basisstation des Weiteren Folgendes umfasst:
ein Berechnungsmodul (903), das dafür konfiguriert ist, wenn sich die Kanaleigenschaften oder die disponierten Nutzer-Endgeräte ändern, Gewichtswerte der Vorcodierungsmatrix zu berechnen, die dafür verwendet werden, die Datenströme und das Pilotsignal zu gewichten.

**Revendications**

1. Procédé de multiplexage multi-utilisateur comprenant :

   • la pondération (101), par une station de base, à l'aide d'une matrice de précodage, de multiples flux de données qui doivent être transmis à N terminaux d'utilisateur, pour obtenir des flux de données à transmettre qui sont mis en correspondance sur K antennes d'émission physiques ;
   • la pondération (102), par la station de base, à l'aide de la matrice de précodage, d'un signal pilote qui doit être transmis aux N terminaux d'utilisateur, pour obtenir des signaux pilotes à transmettre qui sont mis en correspondance sur les K antennes d'émission physiques,
   si un port d'antenne est configuré pour la station de base, la pondération, par la station de base à l'aide de la matrice de précodage, d'un signal pilote qui doit être transmis aux N terminaux d'utilisateur, pour obtenir des signaux pilotes à transmettre qui sont mis en correspondance sur les K antennes d'émission physiques comprenant : la pondération du signal pilote de la manière suivante :

   $Y_0$ = somme($[V_1, V_2, ... V_N]$) $\times$ $p_0$ ; $Y_0$ étant les signaux pilotes à transmettre, $[V_1, V_2, ... V_N]$ étant une matrice de précodage KxN, somme($[V_1, V_2, ... V_N]$) étant un résultat obtenu par réalisation d'une opération de sommation sur les vecteurs de colonne dans toutes les colonnes de $[V_1, V_2, ... V_N]$, n'importe quelle colonne de $[V_1, V_2, ... V_N]$ étant désignée par $V_i$, i étant un nombre entier positif supérieur à 0 et inférieur ou égal à N, $V_i$ étant un total de $l_i$ vecteurs de valeur de précodage attribués par la station de base au i$^{ème}$ terminal d'utilisateur des N terminaux d'utilisateur, $V_i$ étant un vecteur de colonne $K \times 1$, et po étant le signal pilote, et si t ports d'antenne sont configurés pour la station de base, t étant un nombre entier positif supérieur à 1, la pondération, par la station de base à l'aide de la matrice de précodage, du signal pilote qui doit être transmis aux N terminaux d'utilisateur, pour obtenir des signaux pilotes à transmettre qui sont mis en correspondance sur les K antennes d'émission physiques comprenant :

   ○ mettre en correspondance séparément, par la station de base, le signal pilote avec les t ports d'antenne, un signal pilote sur le (m-1)$^{ème}$ port d'antenne étant mis en correspondance sur les K antennes démission physiques de la manière suivante :

   $$Y_{(m-1)} = \text{somme}([V_1(:,m), V_2(:,m), ... V_N(:,m)]) \times p_{(m-1)} \, ;$$

   $Y_{(m-1)}$ étant un signal pilote à transmettre qui est mis en correspondance sur le (m-1)$^{ème}$ port d'antenne, $[V_1, V_2, ... V_N]$ étant une matrice de précodage KxN, n'importe quelle colonne de $[V_1, V_2, ... V_N]$ étant désignée par $V_i$, i étant un nombre entier positif supérieur à 0 et inférieur ou égal à N, $V_i$ étant une matrice $K \times l_i$, $V_i$ étant un total de $l_i$ vecteurs de valeur de précodage attribués par la station de base au i$^{ème}$ terminal d'utilisateur des N terminaux d'utilisateur, et lorsque $m \leq l_i$, $V_i(:, m)$ désignant le m$^{ème}$ vecteur de colonne de $V_i$, et lorsque $m > l_i$, $V_i(:, m)$ étant un vecteur Kx 1 avec tous les 0,
   m étant un nombre entier positif supérieur ou égal à 1 et inférieur ou égal à t, somme($[V_1(:,m), V_2(:,m), ... V_N(:,m)]$) étant un résultat obtenu par réalisation d'une opération de sommation sur les vecteurs de colonne dans toutes les colonnes de $[V_1(:,m), V_2(:,m), ... V_N(:,m)]$, et $p_{(m-1)}$ étant un signal pilote correspondant au (m-1)$^{ème}$ port d'antenne ; et

   • l'envoi (103), par la station de base, des flux de données à transmettre et des signaux pilotes à transmettre aux N terminaux d'utilisateur à l'aide des K antennes démission physiques, les flux de données à transmettre et les signaux pilotes à transmettre étant mis en correspondance sur différentes ressources temps-fréquence ; N étant un nombre entier positif supérieur ou égal à 2, K étant un nombre entier positif, et la matrice de précodage étant calculée en fonction de caractéristiques de canaux à partir des K antennes d'émission physiques pour les N terminaux d'utilisateur.

2. Station de base comprenant un module de traitement (901) et un module de transmission (902),

• le module de traitement (901) étant configuré pour pondérer, à l'aide d'une matrice de précodage, de multiples flux de données qui doivent être transmis à N terminaux d'utilisateur, pour obtenir des flux de données à transmettre qui sont mis en correspondance sur K antennes démission physiques ;

• le module de traitement (901) étant en outre configuré pour pondérer, à l'aide de la matrice de précodage, un signal pilote qui doit être transmis aux N terminaux d'utilisateur, pour obtenir des signaux pilotes à transmettre qui sont mis en correspondance sur les K antennes d'émission physiques,

si un port d'antenne est configuré pour la station de base, le module de traitement étant configuré spécifiquement pour pondérer le signal pilote de la manière suivante :

$Y_0 = $ somme($[V_1, V_2,... V_N]$) $\times p_0$ ; $Y_0$ étant les signaux pilotes à transmettre, $[V_1, V_2,... V_N]$ étant une matrice de précodage KxN, somme($[V_1, V_2,... V_N]$) étant un résultat obtenu par réalisation d'une opération de sommation sur les vecteurs de colonne dans toutes les colonnes de $[V_1, V_2,... V_N]$, n'importe quelle colonne de $[V_1, V_2,... V_N]$ étant désignée par $V_i$, i étant un nombre entier positif supérieur à 0 et inférieur ou égal à N, $V_i$ étant un total de $l_i$ vecteurs de valeur de précodage attribués par la station de base au $i^{ème}$ terminal d'utilisateur des N terminaux d'utilisateur, $V_i$ étant un vecteur de colonne $K\times1$, et po étant le signal pilote, et si t ports d'antenne sont configurés pour la station de base, t étant un nombre entier positif supérieur à 1, que le module de traitement (901) est configuré pour pondérer, à l'aide de la matrice de précodage, le signal pilote qui doit être transmis aux N terminaux d'utilisateur, pour obtenir des signaux pilotes à transmettre qui sont mis en correspondance sur les K antennes d'émission physiques comprenant :

◦ le module de traitement (901) étant spécifiquement configuré pour mettre en correspondance séparément le signal pilote aux t ports d'antenne, un signal pilote sur le $(m-1)^{ème}$ port d'antenne étant mis en correspondance sur les K antennes démission physiques de la manière suivante:

$$Y_{(m-1)} = \text{somme}([V_1(:,m), V_2(:,m),\dots V_N(:,m)]) \times p_{(m-1)} ;$$

$Y_{(m-1)}$ étant un signal pilote à transmettre qui est mis en correspondance sur le $(m-1)^{ème}$ port d'antenne, $[V_1, V_2,... V_N]$ étant une matrice de précodage KxN, n'importe quelle colonne de $[V_1, V_2,... V_N]$ étant désignée par $V_i$, i étant un nombre entier positif supérieur à 0 et inférieur ou égal à N, $V_i$ étant une matrice $K\times l_i$, $V_i$ étant un total de $l_i$ vecteurs de valeur de précodage attribués par la station de base au $i^{ème}$ terminal d'utilisateur des N terminaux d'utilisateur, et lorsque $m \le l_i$, $V_i(:, m)$ désignant le $m^{ème}$ vecteur de colonne de $V_i$, et lorsque $m > l_i$, $V_i(:, m)$ étant un vecteur Kx 1 avec tous les 0,

m étant un nombre entier positif supérieur ou égal à 1 et inférieur ou égal à t, somme($[V_1(:,m), V_2(:,m),... V_N(:,m)]$) étant un résultat obtenu par réalisation d'une opération de sommation sur les vecteurs de colonne dans toutes les colonnes de $[V_1(:,m), V_2(:,m),... V_N(:,m)]$, et $p_{(m-1)}$ étant un signal pilote correspondant au $(m-1)^{ème}$ port d'antenne ; et

le module de transmission (902) étant configuré pour envoyer les flux de données à transmettre et les signaux pilotes à transmettre aux N terminaux d'utilisateur à l'aide des K antennes d'émission physiques, les flux de données à transmettre et les signaux pilotes à transmettre étant mis en correspondance sur différentes ressources temps-fréquence, et N étant un nombre entier positif supérieur ou égal à 2, K étant un nombre entier positif, et la matrice de précodage étant calculée en fonction de caractéristiques de canaux à partir des K antennes d'émission physiques pour les N terminaux d'utilisateur.

3. Station de base selon la revendication 2, si un seul port d'antenne est configuré pour la station de base, le module de traitement étant spécifiquement configuré pour pondérer N flux de données de la manière suivante :

$$[X_1, X_2,\dots X_K] = [V_1, V_2,...V_N] \times [ s_1 ; s_2 ;\dots ; s_N] ;$$

$[X_1, X_2,... X_K]$ étant les flux de données à transmettre, $[V_1, V_2,... V_N]$ étant une matrice de précodage KxN, n'importe quelle colonne de $[V_1, V_2,... V_N]$ étant désignée par $V_i$, i étant un nombre entier positif supérieur à 0 et inférieur ou égal à N, $V_i$ étant un total de $l_i$ vecteurs de valeur de précodage attribués par la station de base au $i^{ème}$ terminal d'utilisateur des N terminaux d'utilisateur, $V_i$ étant un vecteur de colonne $K\times1$, $[s_i ; s_2 ;... ; s_N]$ étant les N flux de données désignés par un vecteur de colonne $N\times1$, n'importe quelle colonne de $[s_1 ; s_2 ;... ; s_N]$ étant désignée par

$s_i$, et $s_i$ étant un flux de données qui doit être transmis par la station de base au $i^{ème}$ terminal d'utilisateur des N terminaux d'utilisateur.

4. Station de base selon l'une quelconque des revendications 2 à 3, le module de traitement étant en outre configuré pour : avant que le module de transmission n'envoie les flux de données à transmettre et les signaux pilotes à transmettre aux N terminaux d'utilisateur à l'aide des K antennes démission physiques, pondérer, à l'aide de la matrice de précodage, des informations de planification qui doivent être transmises aux N terminaux d'utilisateur, pour obtenir des informations de planification à transmettre qui sont mises en correspondance sur les K antennes démission physiques, les flux de données à transmettre, les signaux pilotes à transmettre, et les informations de planification à transmettre étant mis en correspondance sur différentes ressources temps-fréquence.

5. Station de base selon la revendication 4, si un seul port d'antenne est configuré pour la station de base, le module de traitement étant spécifiquement configuré pour pondérer N éléments d'informations de planification de la manière suivante :

$$[Z_1, Z_2,\ldots Z_K] = [V_1, V_2,\ldots V_N] \times [g_1 ; g_2 ;\ldots ; g_N] ;$$

$[Z_1, Z_2,\ldots Z_K]$ étant les informations de planification à transmettre, $[V_1, V_2,\ldots V_N]$ étant une matrice de précodage KxN, n'importe quelle colonne de $[V_1, V_2,\ldots V_N]$ étant désignée par $V_i$, i étant un nombre entier positif supérieur à 0 et inférieur ou égal à N, $V_i$ étant un total de $l_i$ vecteurs de valeur de précodage attribués par la station de base au $i^{ème}$ terminal d'utilisateur des N terminaux d'utilisateur, $V_i$ étant un vecteur de colonne $K \times 1$, $[g_1 ; g_2 ;\ldots ; g_N]$ étant les N éléments d'informations de planification désignés par un vecteur de colonne $N \times 1$, n'importe quelle colonne de $[g_1 ; g_2 ;\ldots ; g_N]$ étant désignée par gi, et gi étant des informations de planification qui doivent être transmises par la station de base au $i^{ème}$ terminal d'utilisateur des N terminaux d'utilisateur ; ou
si t ports d'antenne sont configurés pour la station de base, t étant un nombre entier positif supérieur à 1, le module de traitement étant configuré pour effectuer un codage de bloc de fréquence spatiale sur les informations de planification qui doivent être transmises aux N terminaux d'utilisateur, pour obtenir N blocs de code qui correspondent respectivement aux N terminaux d'utilisateur, un bloc de code correspondant au $i^{ème}$ terminal d'utilisateur étant $[g_i(1),\ldots, g_i(m)\ldots, g_i(t)]$, i étant un nombre entier positif supérieur à 0 et inférieur ou égal à N, m étant un nombre entier positif supérieur à 0 et inférieur ou égal à t, et $g_i(m)$ désignant un symbole d'information qui doit être mis en correspondance sur le $(m-1)^{ème}$ port d'antenne après le codage de bloc de fréquence spatiale ; et le module de traitement étant configuré pour mettre en correspondance séparément, avec les t ports d'antenne, les blocs de code qui correspondent à tous les terminaux d'utilisateur, le $m^{ème}$ bloc de code des N terminaux d'utilisateur étant mis en correspondance sur le $(m-1)^{ème}$ port d'antenne de la manière suivante :

$$[Z_{i,1}, Z_{i,2},\ldots Z_{i,K}] = [V_1(:,m), V_2(:,m),\ldots V_N(:,m)] \times [g_1(m), \ldots, g_N(m)] ;$$

$[Z_{i,1}, Z_{i,2},\ldots Z_{i,K}]$ étant des informations de planification à transmettre attribuées par la station de base au $i^{ème}$ terminal d'utilisateur des N terminaux d'utilisateur, $[V_1, V_2,\ldots V_N]$ étant une matrice de précodage KxN, n'importe quelle colonne de $[V_1, V_2,\ldots V_N]$ étant désignée par $V_i$, i étant un nombre entier positif supérieur à 0 et inférieur ou égal à N, $V_i$ étant une matrice $K \times l_i$, $V_i$ étant un total de $l_i$ vecteurs de valeur de précodage attribués par la station de base au $i^{ème}$ terminal d'utilisateur des N terminaux d'utilisateur, et m étant un nombre entier positif supérieur à 0 et inférieur ou égal à t, et lorsque $m \leq l_i$, $V_i(:, m)$ désignant le $m^{ème}$ vecteur de colonne de $V_i$, et lorsque $m > l_i$, $V_i(:, m)$ étant un vecteur Kx 1 avec tous les 0.

6. Station de base selon l'une quelconque des revendications 2 à 5, le module de traitement étant en outre configuré pour : avant que le module de transmission n'envoie les flux de données à transmettre et les signaux pilotes à transmettre aux N terminaux d'utilisateur à l'aide des K antennes démission physiques, pondérer un signal commun à l'aide de la matrice de précodage, pour obtenir un premier signal commun à transmettre qui est mis en correspondance sur les K antennes d'émission physiques, les flux de données à transmettre, les signaux pilotes à transmettre, et le premier signal commun à transmettre étant mis en correspondance sur différentes ressources temps-fréquence.

7. Station de base selon l'une quelconque des revendications 2 à 5, le module de traitement étant en outre configuré pour : avant que le module de transmission n'envoie les flux de données à transmettre et les signaux pilotes à transmettre aux N terminaux d'utilisateur à l'aide des K antennes démission physiques, pondérer un signal commun à l'aide de la matrice de précodage ou d'une matrice de mise en correspondance d'une manière à répartition dans le temps, pour obtenir un second signal commun à transmettre qui est mis en correspondance sur les K antennes démission physiques, la matrice de mise en correspondance restant inchangée lorsque les caractéristiques de canal ou les terminaux d'utilisateur programmés changent, et les flux de données à transmettre, les signaux pilotes à transmettre, et le second signal commun à transmettre étant mis en correspondance sur différentes ressources temps-fréquence.

8. Station de base selon l'une ou l'autre des revendications 6 et 7, K étant supérieur à N.

9. Station de base selon la revendication 6, si un seul un port d'antenne est configuré pour la station de base, le module de traitement étant configuré spécifiquement pour pondérer le signal commun de la manière suivante :

$$P = \mathrm{somme}([V_1, V_2,...V_N]) \times c \; ;$$

P étant le premier signal commun à transmettre, $[V_1, V_2,... V_N]$ étant une matrice de précodage $K \times N$, n'importe quelle colonne de $[V_1, V_2,... V_N]$ étant désignée par $V_i$, i étant un nombre entier positif supérieur à 0 et inférieur ou égal à N, $V_i$ étant un total de $l_i$ vecteurs de valeur de précodage attribués par la station de base au $i^{ème}$ terminal d'utilisateur des N terminaux d'utilisateur, $V_i$ étant un vecteur de colonne $K \times 1$, $\mathrm{somme}([V_1, V_2,... V_N])$ étant un résultat obtenu par réalisation d'une opération de sommation sur les vecteurs de colonne dans toutes les colonnes de $[V_1, V_2,... V_N]$, et c étant le signal commun ; ou
si t ports d'antenne sont configurés pour la station de base, t étant un nombre entier positif supérieur à 1, le module de traitement étant configuré pour effectuer un codage de bloc de fréquence spatiale sur le signal commun pour obtenir t symboles d'informations codés qui correspondent aux t ports d'antenne, un symbole d'information codé correspondant au $(m-1)^{ème}$ port d'antenne étant désigné par $c_m$, et m étant un nombre entier positif supérieur à 0 et inférieur ou égal à t ; et
le module de traitement étant configuré pour mettre en correspondance séparément, avec les t ports d'antenne, les blocs de code qui correspondent à tous les terminaux d'utilisateur, le $m^{ème}$ bloc de code étant mis en correspondance sur le $(m-1)^{ème}$ port d'antenne de la manière suivante :

$$P_m = \mathrm{somme}([V_1(:,m), V_2(:,m),... V_N(:,m)]) \times c_m \; ;$$

$P_m$ étant le premier signal commun à transmettre qui est mis en correspondance sur le $(m-1)^{ème}$ port d'antenne, $[V_1, V_2,... V_N]$ étant une matrice de précodage $K \times N$, n'importe quelle colonne de $[V_1, V_2,... V_N]$ étant désignée par $V_i$, i étant un nombre entier positif supérieur à 0 et inférieur ou égal à N, $V_i$ étant une matrice $K \times l_i$, $V_i$ étant un total de $l_i$ vecteurs de valeur de précodage attribués par la station de base au $i^{ème}$ terminal d'utilisateur des N terminaux d'utilisateur, et lorsque $m \leq l_i$, $V_i(:, m)$ désignant le $m^{ème}$ vecteur de colonne de $V_i$, et lorsque $m > l_i$, $V_i(:, m)$ étant un vecteur $K \times 1$ avec tous les 0, m étant un nombre entier positif supérieur ou égal à 1 et inférieur ou égal à t, $\mathrm{somme}([V_1(:,m), V_2(:,m),... V_N(:,m)])$ étant un résultat obtenu par réalisation d'une opération de sommation sur les vecteurs de colonne dans toutes les colonnes de $[V_1(:,m), V_2(:,m),... V_N(:,m)]$, et $c_m$ étant un signal commun correspondant au $(m-1)^{ème}$ port d'antenne.

10. Station de base selon l'une quelconque des revendications 2 à 9, la station de base comprenant en outre : un module de calcul (903), configuré pour : lorsque les caractéristiques de canal ou les terminaux d'utilisateur programmés changent, recalculer les valeurs de pondération de la matrice de précodage utilisée pour pondérer les flux de données et le signal pilote.

A base station weights, by using a precoding matrix, multiple data streams that need to be transmitted to N user terminals, to obtain to-be-transmitted data streams that are mapped onto K physical transmit antennas — 101

The base station weights, by using the precoding matrix, a pilot signal that needs to be transmitted to the N user terminals, to obtain to-be-transmitted pilot signals that are mapped onto the K physical transmit antennas — 102

The base station separately transmits the to-be-transmitted data streams and the to-be-transmitted pilot signals by using the K physical transmit antennas — 103

FIG. 1

A base station weights, by using a precoding matrix, multiple data streams that need to be transmitted to N user terminals, to obtain to-be-transmitted data streams that are mapped onto K physical transmit antennas — 201

The base station weights, by using the precoding matrix, a pilot signal that needs to be transmitted to the N user terminals, to obtain to-be-transmitted pilot signals that are mapped onto the K physical transmit antennas — 202

The base station weights, by using the precoding matrix, scheduling information that needs to be transmitted to the N user terminals, to obtain to-be-transmitted scheduling information that is mapped onto the K physical transmit antennas — 203

The base station sends the to-be-transmitted data streams, the to-be transmitted pilot signals, and the to-be-transmitted scheduling information to the N user terminals by using the K physical transmit antennas — 204

FIG. 2

A base station weights, by using a precoding matrix, multiple data streams that need to be transmitted to N user terminals, to obtain to-be-transmitted data streams that are mapped onto K physical transmit antennas ⟋— 301

The base station weights, by using the precoding matrix, a pilot signal that needs to be transmitted to the N user terminals, to obtain to-be-transmitted pilot signals that are mapped onto the K physical transmit antennas ⟋— 302

he base station weights a common signal by using the precoding matrix, to obtain a first to-be-transmitted common signal that is mapped onto the K physical transmit antennas ⟋— 303

The base station sends the to-be-transmitted data streams, the to-be-transmitted pilot signals, and the first to-be-transmitted common signal to the N user terminals by using the K physical transmit antennas ⟋— 304

FIG. 3

FIG. 4

One frame

One timeslot

| Subframe #0 | Subframe #1 | Subframe #2 | Subframe #3 | Subframe #4 | Subframe #5 | Subframe #6 | Subframe #7 | Subframe #8 | Subframe #9 |
|---|---|---|---|---|---|---|---|---|---|

FIG. 5

EP 3 188 393 B1

FIG. 6-a

FIG. 6-b

FIG. 7-a

EP 3 188 393 B1

FIG. 7-b

A user terminal receives transmitted data streams and transmitted pilot signals that are sent by a base station by using K physical transmit antennas — 801

The user terminal performs, according to the transmitted pilot signals, channel estimation on a channel corresponding to an antenna port — 802

The user terminal demodulates the transmitted data streams according to a result of the channel estimation — 803

FIG. 8

— 900

Base station

— 901

Processing module

— 902

Transmission module

FIG. 9-a

900

Base station

901
Processing module

902
Transmission module

903
Calculation module

FIG. 9-b

1000

User terminal

1001
Receiving module

1002
Processing module

FIG. 10

1100

Base station

1101

Processor

1103

Physical transmit antenna

Bus

1102

Memory

FIG. 11

1200

User terminal

1201

Processor

1203

Physical transmit antenna

Bus

1202

Memory

FIG. 12

**EP 3 188 393 B1**

## REFERENCES CITED IN THE DESCRIPTION

### Patent documents cited in the description

- US 20120008587 A1
- WO 2004038984 A2
- US 20100195615 A1